# EUROPÄISCHE PATENTSCHRIFT

(11) **EP 3 820 645 B1**
(45) Veröffentlichungstag und Bekanntmachung des Hinweises auf die Patenterteilung: **16.11.2022**
(21) Anmeldenummer: 19780163.2
(22) Anmeldetag: 18.09.2019
(51) Int. Cl.: B23K 26/14, B23K 26/348, B23K 9/167, B23K 9/173, B23K 26/342, B23K 103/04

(54) **VERFAHREN ZUM HERSTELLEN METALLISCHER STRUKTUREN**
METHOD FOR THE PRODUCTION OF METALLIC STRUCTURES
PROCÉDÉ DE FABRICATION DE STRUCTURES MÉTALLIQUES

(30) Priorität: 20.09.2018 EP 18195766
(43) Veröffentlichungstag der Anmeldung: 19.05.2021
(73) Patentinhaber: FRONIUS INTERNATIONAL GmbH, 4643 Pettenbach (AT)
(72) Erfinder: RÜHRNÖSSL, Manfred, 4643 Pettenbach (AT); SCHORN, Markus, 4643 Pettenbach (AT); STAUFER, Herbert, 4643 Pettenbach (AT)
(74) Vertreter: Patentanwälte Pinter & Weiss OG
(86) Internationale Anmeldenummer: PCT/EP2019/074927
(87) Internationale Veröffentlichungsnummer: WO 2020/058298

(56) Entgegenhaltungen:
- WO-A1-2006/133034
- US-A1- 2011 132 878
- US-A1- 2012 006 795

## Beschreibung

Die Erfindung betrifft ein Verfahren zum automatisierten Herstellen dreidimensionaler metallischer Strukturen auf einem metallischen Grundwerkstoff, wobei ein erster metallischer Zusatzstoff einer Schweißstelle zugeführt wird, der zumindest mittels eines, zwischen einer ersten Elektrode und dem Grundwerkstoff erzeugten ersten Lichtbogens zum Herstellen einer ersten Schweißnaht an der Schweißstelle abgeschmolzen wird und wobei der Schweißstelle ein Laserstrahl zugeführt wird, wobei der Schweißstelle ein zweiter metallischer Zusatzstoff zugeführt wird, der zumindest mittels eines zwischen einer zweiten Elektrode und dem Grundwerkstoff erzeugten zweiten Lichtbogens zum Herstellen einer zweiten Schweißnaht an der Schweißstelle abgeschmolzen wird, wobei als erster metallischer Zusatzstoff und als zweiter metallischer Zusatzstoff verschiedene Werkstoffe verwendet werden. Die Erfindung betrifft weiters eine Schweißanordnung mit einer Optik, mit einem ersten Schweißbrenner mit einer ersten Elektrode, mit einer ersten Zuführeinrichtung zum Zuführen des ersten metallischen Zusatzstoffs zu einer Schweißstelle und mit zumindest einer Steuerungseinheit zur Steuerung der Schweißanordnung, wobei in der Schweißanordnung zumindest ein zweiter Schweißbrenner mit einer zweiten Elektrode zur Erzeugung eines zweiten Lichtbogens zwischen der zweiten Elektrode und dem Grundwerkstoff zum Abschmelzen eines zweiten metallischen Zusatzstoffs zur Erzeugung einer zweiten Schweißnaht am Grundwerkstoff angeordnet ist und eine zweite Zuführeinrichtung zum Zuführen des zweiten metallischen Zusatzstoffs zur Schweißstelle vorgesehen ist, und wobei als erster metallischer Zusatzstoff und als zweiter metallischer Zusatzstoff verschiedene Werkstoffe vorgesehen sind. Zudem betrifft die Erfindung eine Verwendung der Schweißanordnung zum Herstellen dreidimensionaler metallischer Strukturen auf einem metallischen Grundwerkstoff.

Derzeit gibt es eine Reihe von gängigen Schweißverfahren im Stand der Technik. Beispielsweise sind Metall-Schutzgas-Schweißprozesse (MSG) seit vielen Jahren bekannt. Dazu zählen z.B. das Metall-Inert-Gas Verfahren (MIG) oder auch das Metall-Aktiv-Gas Verfahren (MAG) bei welchen eine abschmelzende Elektrode aus einem metallischen Elektrodenwerkstoff von einem sogenannten Schutzgas umgeben wird. Metall-Schutzgas-Schweißprozesse werden in der Regel entweder dazu verwendet, auf einen Grundwerkstoff eine Schweißnaht aufzubringen (Auftragsschweißen) oder dazu zwei Grundwerkstoffe zu verbinden (Verbindungsschweißen). In beiden Fällen wird mittels einer elektrischen Spannung bzw. einem daraus resultierenden elektrischen Strom ein Lichtbogen zwischen der Elektrode und dem Grundwerkstoff gezündet, welcher die Elektrode und den, die Elektrode umgebenden Bereich des Grundwerkstoffs abschmilzt, wodurch eine stoffschlüssige Verbindung hergestellt wird. Als Elektrodenmaterial wird üblicherweise dasselbe oder ein ähnliches Material wie für den Grundwerkstoff verwendet. Die Elektrode wird mit einer bestimmten Elektroden-Vorschubgeschwindigkeit der Schweißstelle zugeführt, wobei die Elektroden-Vorschubgeschwindigkeit fest vorgegeben werden kann, z.B. beim manuellen Schweißen per Hand oder auch von anderen Parametern abhängig sein kann, beispielsweise von einer Schweißgeschwindigkeit, mit der die Elektrode relativ zum Grundwerkstoff bewegt wird oder in Abhängigkeit des Stroms, etc.

Das Schutzgas dient dazu, den Lichtbogen und den Bereich der Schmelze von der Atmosphäre abzuschirmen, im Wesentlichen um eine Oxidation zu vermeiden. Als Schutzgas wird entweder ein inertes Gas (MIG) verwendet oder ein aktives Gas (MAG). Inerte Gase, beispielsweise Helium (He) oder Argon (Ar), sind solche Gase, die keine chemischen Reaktionen mit der Schmelze eingehen. Das MIG-Verfahren wird vorwiegend für Nichteisenmetalle und hochlegierte Stähle genutzt. Aktive Gase, wie beispielsweise Kohlendioxid (CO₂) oder Sauerstoff (O) sind reaktionsfreudige Gase, die verwendet werden, um die Zusammensetzung der Schmelze bewusst zu verändern. Sie werden bevorzugt für unlegierte und niedriglegierte Stähle verwendet.

Ein weiteres Schweißverfahren ist das sogenannte Wolfram-Inertgas-Schweißen (WIG-Schweißen oder im englischen Sprachgebrauch Tungsten Inert-Gas Welding (TIG)). Im Gegensatz zu den oben genannten MSG-Verfahren wird beim WIG-Verfahren eine WolframElektrode mit einem sehr hohen Schmelzpunkt verwendet, sodass die Elektrode beim Schweißen nicht abschmilzt. Der Schweißzusatz wird dementsprechend separat in Form eines Schweißdrahtes der Schweißstelle zugeführt. Der Schweißzusatz wird im Lichtbogen abgeschmolzen, der zwischen der Wolfram-Elektrode und dem Grundwerkstoff brennt. Als Schutzgase werden analoge inerte Schutzgase wie beim MIG-Verfahren verwendet.

Daneben gibt es auch das sogenannte Laserschweißen, das sowohl für das Auftragsschweißen, als auch für das Verbindungsschweißen eingesetzt wird. Dabei wird einem Werkstück mittels einer leistungsfähigen Optik ein Laserstrahl zugeführt, der über einen Wärmeeintrag das Werkstück lokal aufschmilzt. Ähnlich wie beim WIG-Verfahren wird der Schweißstelle beim Laser-Auftragsschweißen ein Zusatzstoff, z.B. in Form eines Schweißdrahtes zugeführt.

Ein weiteres Schweißverfahren ist das sogenannte Laser-Hybrid-Schweißen, bei dem der MSG-Schweißprozess und der Laser-Schweißprozess kombiniert werden. Dabei dient der Laser als Unterstützung des Lichtbogens des MSG-Prozesses, also dazu, den Wärmeeintrag in das Werkstück und/oder in den Zusatzwerkstoff zu erhöhen.

Wurde früher meistens per Hand geschweißt, kommen heute aufgrund der verfügbaren Automatisierungstechnik oftmals Schweißroboter zum Einsatz, mit denen eine schnelle und präzise Herstellung von Schweißnähten möglich ist. Dadurch ist es aber nicht nur möglich, einzelne Schweißnähte auf ein Werkstück aufzuschweißen, sondern es lassen sich, analog des 3D-Drucks, ganze dreidimensionale Strukturen erschaffen, indem einzelne Schweißnähte schichtweise aufgetragen werden. Das kann natürlich auch manuell erfolgen, für eine möglichst hohe Genauigkeit wird es aber vorzugsweise computergesteuert durchgeführt. Solche Prozesse werden auch Additive Manufacturing (AM) oder Wire Arc Additive Manufacturing (WAAM) genannt.

Mit den im Stand der Technik bekannten Verfahren ist man allerdings hinsichtlich der Schweißgeschwindigkeit, Präzision der Führung des Lichtbogens und hinsichtlich der Flexibilität in der Materialwahl des Schweißzusatzes eingeschränkt. Dies ist nachteilig, weil dadurch die Effizienz und damit die Wirtschaftlichkeit des Schweißprozesses eingeschränkt sind. Gleichfalls können komplexe Geometrien auch verschiedene Schweißprozesseinstellung erfordern, beispielsweise um dünne Strukturen mit wenig Material und dicke Strukturen mit viel Material herstellen zu können. Auch das ist mit bekannten Verfahren nur schwer oder gar nicht realisierbar.

Die AT 515465 A1 zeigt beispielsweise ein Verfahren zur Generierung dreidimensionaler Strukturen mittels Laserstrahlung. Dabei werden mehrere Drähte einer Schweißstelle zugeführt und durch einen Laserstrahl abgeschmolzen, um die dreidimensionale Struktur zu erzeugen. Je nach gewünschter Größe der zu erzeugenden dreidimensionale Struktur kann die Anzahl der Drähte variiert werden und der Fokus des Laserstrahls entsprechend an die veränderliche Anzahl der Drähte angepasst werden. Nachteilig ist unter anderem die im Vergleich zum herkömmlichen MSG-Schweißen relativ geringe Abschmelzleistung, wodurch die Herstellung insbesondere großvolumige Strukturen zeitaufwändig und dadurch kostenintensiv ist.

Das Dokument WO 97/45227 A1 zeigt das bekannte Tandem-MSG-Schweißverfahren der Anmelderin, bei dem mehrere parallel zueinander verlaufende Schweißdrähte einem gemeinsamen Schweißbrenner zugeführt werden. Dadurch kann die Abschmelzleistung im Vergleich zu herkömmlichen MSG-Schweißverfahren mit einem Schweißdraht erhöht werden. Nachteilig ist allerdings aufgrund der im Wesentlichen fest vorgegebene Abstände der Schweißdrähte die geringe Felixibilität bei der Erzeugung dreidimensionale Strukturen und die fehlende Maßgenauigkeit, da der Lichtbogen gewissen Streuungen unterworfen ist und deshalb nicht exakt positioniert werden kann.

WO 2006/133034 A1 bildet die Basis für die jeweiligen Oberbegriffe der Ansprüche 1 und 9 und offenbart ein Verfahren zum Laser-Hybrid-Auftragsschweißen zur Erzeugung dreidimensionaler Strukturen, wobei einer Schweißstelle gleichzeitig ein Laser sowie ein oder zwei Schweißelektroden aus den gleichen oder unterschiedlichen Metallen zugeführt werden.

US 2011/0132878 A1 und US 2012/0006795 A1 offenbaren Verfahren zum Laser-Hybrid-Verbindungsschweißen zur Verbindung von Bauteilen, wobei einer Schweißstelle gleichzeitig ein Laser sowie ein oder mehrere Schweißelektroden zugeführt werden.

Es ist deshalb die Aufgabe der Erfindung, ein verbessertes Verfahren zum Herstellen von metallischen Strukturen anzugeben, das eine hohe Flexibilität hinsichtlich Prozess-Geschwindigkeit der Herstellung, Materialzusammensetzung der metallischen Struktur, Herstellungsgenauigkeit, Geometrie und Qualität der erzeugten Struktur erlaubt.

Erfindungsgemäß wird die Aufgabe dadurch gelöst, dass der erste metallische Zusatzstoff und der zweite metallische Zusatzstoff der Schweißstelle zeitlich sequentiell zugeführt werden und im Bereich der Schweißstelle im jeweils brennenden ersten oder zweiten Lichtbogen abgeschmolzen werden, um die dreidimensionale metallische Struktur zu bilden. Durch das sequentielle Schweißen mit zwei unterschiedlichen metallischen Zusatzstoffen kann eine dreidimensionale metallische Struktur sehr flexibel schichtweise aus zwei unterschiedlichen Materialien aufgebaut werden. Durch die Laserunterstützung kann ein zusätzlicher Wärmeeintrag erreicht werden.

Vorteilhafterweise werden als erster metallischer Zusatzstoff und als zweiter metallischer Zusatzstoff Schweißdrähte gleicher oder verschiedener Dimension verwendet werden, vorzugsweise Schweißdrähte mit rundem Querschnitt und einem Durchmesser zwischen 0,1 und 5 Millimeter, insbesondere zwischen 0,8 und 2mm verwendet. Durch die Verwendung herkömmlicher Schweißzusätze kann das Verfahren vereinfacht und standardisiert werden.

Der erste metallische Zusatzstoff kann mit einer vorgegebenen ersten Drahtvorschubgeschwindigkeit der Schweißstelle zugeführt werden und/oder der zweite metallische Zusatzstoff kann mit einer vorgegebenen zweiten Drahtvorschubgeschwindigkeit der Schweißstelle zugeführt werden, wobei die erste Drahtvorschubgeschwindigkeit und die zweite Drahtvorschubgeschwindigkeit gleich groß oder verschieden zwischen 2m/min und 25 m/min festgelegt werden können. Dadurch kann die jeweilige Drahtvorschubgeschwindigkeit flexibel an die vorgegebenen Randbedingungen, insbesondere an die zu erzeugende Geometrie und Material-Zusammensetzung der metallischen Struktur angepasst werden.

Vorzugsweise werden der erste metallische Zusatzstoff, der zweite metallische Zusatzstoff und der Laserstrahl gemeinsam relativ zum Grundwerkstoff bewegt und/oder es wird der Grundwerkstoff relativ zum ersten metallischen Zusatzstoff, zweiten metallischen Zusatzstoff und Laserstrahl bewegt und/oder es wird zumindest der erste metallische Zusatzstoff oder der zweite metallische Zusatzstoff relativ zum Laserstrahl bewegt oder der Laserstrahl relativ zu zumindest dem ersten metallischen Zusatzstoff oder dem zweiten metallischen Zusatzstoff. Dadurch kann der Bewegungsablauf zur Erzeugung dreidimensionaler metallischer Strukturen flexibel festgelegt werden und das Verfahren kann besser an erforderliche Genauigkeitsanforderungen angepasst werden, was bei komplexen dreidimensionalen Geometrien der metallischen Struktur vorteilhaft ist. Z.B. könnten ortsfeste Schweißbrenner und eine ortsfeste die Optik verwendet werden und nur der metallische Grundwerkstoff räumlich bewegt werden oder umgekehrt oder beides gleichzeitig.

Es ist vorteilhaft, wenn die erste Drahtvorschubgeschwindigkeit bei der Bewegung des ersten metallischen Zusatzstoffs relativ zum Grundwerkstoff in Abhängigkeit einer ersten Schweißgeschwindigkeit des ersten metallischen Zusatzstoffs relativ zum Grundwerkstoff gewählt wird und/oder die zweite Drahtvorschubgeschwindigkeit bei der Bewegung des zweiten metallischen Zusatzstoffs relativ zum Grundwerkstoff in Abhängigkeit einer zweiten Schweißgeschwindigkeit des zweiten metallischen Zusatzstoffs relativ zum Grundwerkstoff gewählt wird. Dadurch kann beispielsweise ein im Wesentlichen konstanter Querschnitt der Schweißnaht über die gesamte Schweißnahtlänge erreicht werden oder es kann bewusst eine Querschnittsveränderung über die Länge der Schweißnaht erreicht werden. Vorteilhafterweise wird mittels des Laserstrahls der metallischen Struktur Wärme zur Gefügeveränderung der metallischen Struktur zugeführt, vorzugsweise zur Vermeidung von Bindefehlern zwischen der ersten und zweiten Schweißnaht und/oder zum Vergüten und/oder Härten einer Oberfläche der der ersten und/oder der zweiten Schweißnaht oder der metallischen Struktur oder der Laserstrahl wird zum Führen des ersten oder des zweiten Lichtbogens verwendet. Durch diese flexible Anwendung des Laserstrahls kann beispielsweise bereits während des Herstellungsprozesses der metallischen Struktur gezielt eine Oberflächenhärtung bestimmter vorgegebener Bereiche der metallischen Struktur erzeugt werden. Dadurch kann z.B. auf einen separaten nachfolgenden Härteprozess verzichtet werden, wodurch Zeit und Kosten gespart werden können. Bei der Führung eines Lichtbogens wird der jeweilige Lichtbogen im Wesentlichen vom Laserstrahl angezogen, wodurch eine sehr präziser Schweißprozess und damit eine hohe Maßgenauigkeit der erzeugten metallischen Struktur resultieren.

Der Laserstrahl kann zum Laser-Hybridschweißen verwendet werden, wobei zumindest der erste oder der zweite metallische Zusatzstoff an der Schweißstelle vom Laserstrahl und dem ersten oder zweiten Lichtbogen abgeschmolzen wird. Dadurch werden bekannte Verfahren kombiniert oder können unabhängig voneinander verwendet werden, wodurch man sehr flexibel auf verschiedene geforderte Randbedingungen reagieren kann.

Es ist vorteilhaft, wenn der erste metallische Zusatzstoff die erste Elektrode ausbildet und an der Schweißstelle abgeschmolzen wird und/oder der zweite metallische Zusatzstoff die zweite Elektrode ausbildet und an der Schweißstelle abgeschmolzen wird oder wenn als erste Elektrode eine nichtabschmelzende erste Elektrode, vorzugsweise eine erste Wolframelektrode, vorgesehen wird, wobei der erste metallische Zusatzstoff der Schweißstelle, vorzugsweise mittels einer ersten Zuführeinheit, zugeführt und an der Schweißstelle abgeschmolzen wird und/oder als zweite Elektrode eine nichtabschmelzende zweite Elektrode, vorzugsweise eine zweite Wolframelektrode, vorgesehen wird, wobei der zweite metallische Zusatzstoff der Schweißstelle, vorzugsweise mittels einer zweiten Zuführeinheit, zugeführt und an der Schweißstelle abgeschmolzen wird. Dadurch kann zum Schweißen der ersten und/oder der zweiten Schweißnaht das bekannte MSG-Schweißverfahren oder das bekannte WIG-Schweißverfahren verwendet werden.

Die Aufgabe wird weiters mit einer Schweißanordnung der eingangs genannten Art dadurch gelöst, dass die Steuerungseinheit zur Ansteuerung der ersten und zweiten Zuführeinrichtung vorgesehen ist, um den ersten metallischen Zusatzstoff und den zweiten metallischen Zusatzstoff der Schweißstelle zeitlich sequentiell zuzuführen, wobei der erste und der zweite Schweißbrenner als separate Einheiten oder als ein Doppel-Schweißbrenner ausgeführt sind.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 einen schematischen Aufbau einer MSG-Schweißvorrichtung,
Fig.2 eine erfindungsgemäße Schweißanordnung,
Fig.3 ein Grundwerkstoff mit zwei mittels des erfindungsgemäßen Verfahrens erzeugten metallischen Strukturen.

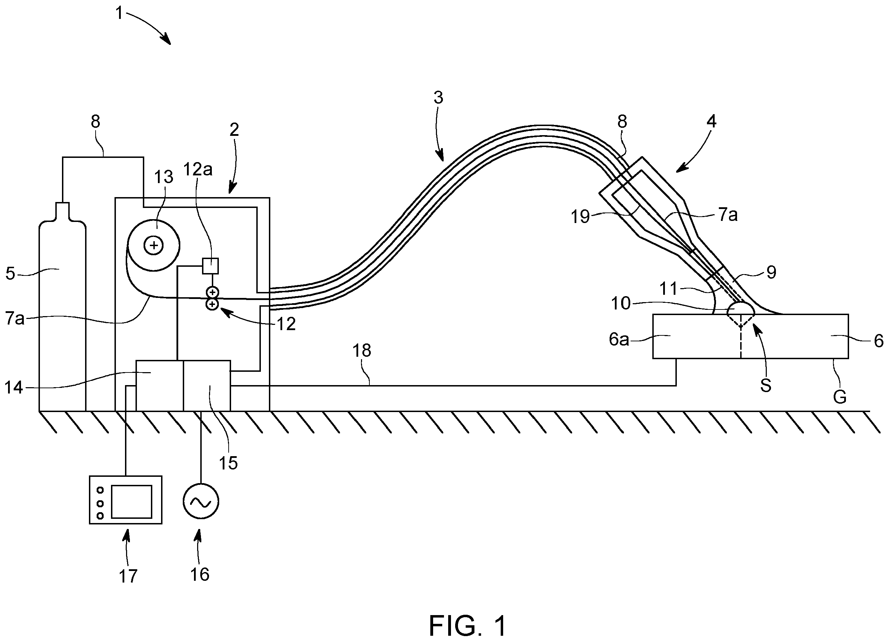

In Fig.1 zeigt den grundsätzlichen Aufbau einer Metall-Schutzgas (MSG) Schweißvorrichtung 1. Die Schweißvorrichtung 1 weist eine Schweißstromquelle 2, ein Schlauchpaket 3, einen Schweißbrenner 4 und einen Schutzgasbehälter 5 mit einem Schutzgas SG auf. Der Schutzgasbehälter 5 ist mittels einer Schutzgasleitung 8 mit dem Schweißbrenner 4 verbunden. Im Schutzgasbehälter 5 oder in der Schutzgasleitung 8 kann ein nicht dargestellter Druckregler, beispielsweise in Form einer bekannten Flaschenarmatur, vorgesehen sein, der in der Regel dazu dient, den Durchfluss des Schutzgases SG zu regeln. In der Schweißstromquelle 2 kann eine Schweiß-Elektrode in Form eines Schweißdrahtes 7 angeordnet sein, der üblicherweise auf einer Schweißdraht-Rolle 13 aufgewickelt ist oder aus einem Fass gefördert wird. Zum Abwickeln des Schweißdrahtes 7 und insbesondere zum Zuführen des Schweißdrahtes 7 zu einer Schweißstelle S ist eine Vorschubeinheit 12 angeordnet, die von einer Vorschub-Antriebseinheit 12a angetrieben wird. Der Schweißdraht 7 auf der Schweißdraht-Rolle 13 kann aber auch außerhalb der Schweißstromquelle 2 in einer davon getrennten Einheit angeordnet sein. Die Vorschub-Antriebseinheit 12a wird von einer Steuerungseinheit 14 angesteuert, welche wiederum in der Regel mit einer Benutzerschnittstelle 17 kommuniziert.

Über die Benutzerschnittstelle 17 können von einem Benutzer bestimmte Schweißparameter vorgegeben werden, wie z.B. ein Schweißstrom I, eine Drahtvorschubgeschwindigkeit vd, etc. Es können beispielsweise auch vordefinierte Schweißprogramme mit bestimmten voreingestellten Schweißparametern in der Steuerungseinheit 14 hinterlegt sein, welche vom Benutzer über die Benutzerschnittstelle 17 ausgewählt werden können. In der Schweißstromquelle 2 ist weiters ein Leistungsteil 15 angeordnet, das von der Steuerungseinheit 14 gesteuert (und/oder geregelt) wird und die an eine externe Spannungsversorgung 16 angeschlossen ist. Das Leistungsteil 15 versorgt den Schweißbrenner 4 mit dem benötigten Schweißstrom I über eine im Schlauchpaket 3 angeordnete Stromleitung 19. Daneben werden dem Schweißbrenner 4 über das Schlauchpaket 3 üblicherweise auch der Schweißdraht 7 (mittels der Vorschubeinheit 12) und das Schutzgas SG, und gegebenenfalls auch ein Kühlmedium zum Kühlen des Schweißbrenners 4, zugeführt. Im Schlauchpaket können darüber hinaus auch Steuerleitungen vorgesehen sein. Es können aber als Schlauchpaket 3 auch mehrere einzelne Leitungen für die jeweiligen Medien, Steuerungen und Energien vorgesehen sein.

Um einen Schweißprozess durchzuführen wird einem Werkstück 6 aus einem Grundwerkstoff G ein erstes elektrisches Potential angelegt und es wird über die Stromleitung 19 an den Schweißdraht 7a als Schweißelektrode ein zweites elektrisches Potential angelegt, wodurch nach Zünden eines Lichtbogens 11 zwischen dem Schweißdraht 7 und dem Werkstück 6 ein Schweißstrom I fließt. Mittels des Lichtbogens 11 wird der Schweißdraht 7 und ein Bereich des Grundwerkstoffs G abgeschmolzen, wodurch sich eine stoffschlüssige Verbindung zwischen dem Schweißdraht 7 und dem Grundwerkstoff G ergibt. Im dargestellten Beispiel wird eine Schweißnaht 10 auf das Werkstück 6 aufgeschweißt, man spricht vom sogenannten Auftragsschweißen. Es könnten aber auch zwei Werkstücke 6, 6a verbunden werden, wie durch die gestrichelte Linie symbolisiert ist, man spricht dann vom sogenannten Verbindungsschweißen. Der Lichtbogen 11 wird von dem aus dem Schweißbrenner 4 ausströmenden Schutzgas SG in Form einer Schutzgasglocke 9 umströmt, um den Bereich das geschmolzene Material im Bereich der Schweißnaht 10 von der Umgebung abzuschirmen. Es sei aber angemerkt, dass grundsätzlich auch ohne Schutzgas SG geschweißt werden könnte. In diesem Fall könnte auch auf einen Schutzgasbehälter 5 und auf eine Schutzgasleitung 8 verzichtet werden. Es sollte allerdings sichergestellt werden, dass möglichst kein Sauerstoff in die Schweißnaht eingebunden wird.

Wie eingangs erwähnt werden je nach Material des Grundwerkstoffs G üblicherweise entweder reaktionsarme inerte Schutzgase SGi wie beispielsweise Argon (Ar) oder Helium (He) verwendet oder es werden aktive Schutzgase SGa wie z.B. Sauerstoff (O) oder Kohlendioxid (CO2) verwendet. Der Schweißdraht 7a wird der Schweißstelle S mit einer bestimmten Drahtvorschubgeschwindigkeit vd zugeführt, welche von mehreren Einflussgrößen abhängig sein kann. Beim manuellen Schweißen, bei dem der Schweißbrenner 4 von einer Person per Hand geführt wird, wird in der Regel eine konstante Drahtvorschubgeschwindigkeit vd beispielsweise in Abhängigkeit des eingestellten Schweißstroms I gewählt. Bei automatisierten Schweißvorgängen, beispielsweise wenn der Schweißbrenner 4 von einem Roboter geführt wird, kann die Drahtvorschubgeschwindigkeit vd z.B. zusätzlich in Abhängigkeit einer Schweißgeschwindigkeit vs gewählt werden, mit der der Schweißbrenner 4 relativ zum Werkstück 6 bewegt wird. Natürlich kann es auch noch andere Einflussgrößen und Schweißparameter geben oder andere Ausführungen der MSG-Schweißvorrichtung 1. Das grundsätzliche bekannte Prinzip bleibt allerdings gleich, weshalb an dieser Stelle keine detailliertere Beschreibung erfolgt.

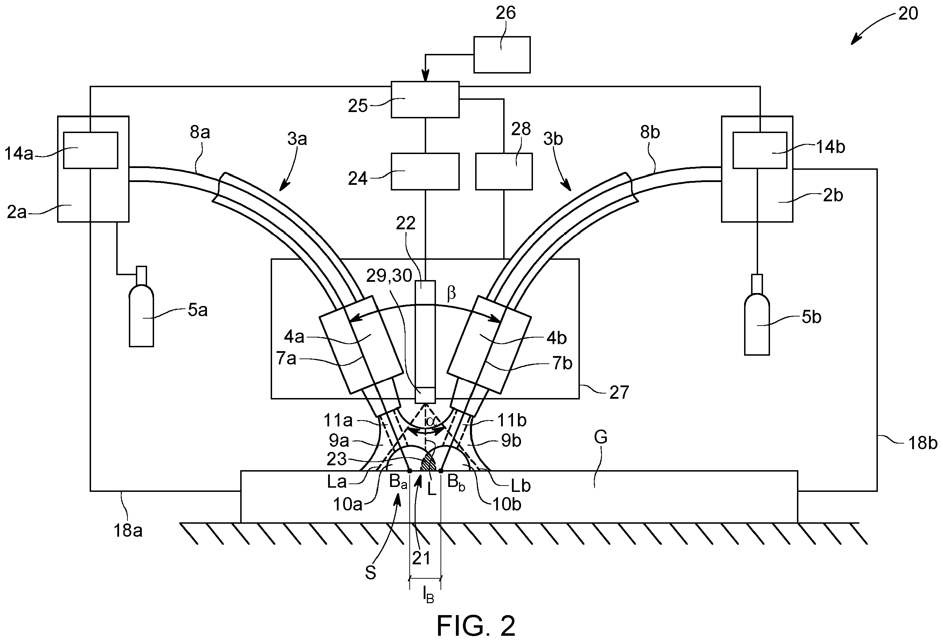

Das erfindungsgemäße Verfahren wird nachfolgend anhand Fig.2 näher beschrieben. In Fig.2 ist eine Schweißanordnung 20 dargestellt, mit der vorzugsweise dreidimensionale metallische Strukturen 21 auf einen Grundwerkstoff G aufgeschweißt werden können. Die dreidimensionalen metallischen Strukturen 21 setzen sich aus mehreren einzelnen Schweißnähten 10i zusammen, die schichtweise übereinander geschweißt werden, wie später noch im Detail erläutert wird. Die Schweißvorrichtung 20 weist zumindest einen ersten und einen zweiten Schweißbrenner 4a, 4b auf, sowie eine Optik 22, welche vorzugsweise zentral zwischen den beiden Schweißbrennern 4a, 4b angeordnet ist. Natürlich muss die Optik 22 aber nicht zentral angeordnet sein, wo wie in Fig.2 dargestellt, sondern könnte auch dezentral, z.B. außenliegend angeordnet sein. Die beiden Schweißbrenner 4a, 4b sind im dargestellten Beispiel als herkömmliche Metall-Schutzgas (MSG) -Schweißbrenner ausgestaltet, beispielsweise so wie anhand Fig.1 erläutert wurde, könnte aber auch z.B. als WIG-Schweißbrenner mit nicht abschmelzender Elektrode ausgestaltet sein. Der erste Schweißbrenner 4a ist im dargestellten Beispiel über ein erstes Schlauchpaket 3a mit einer ersten Schweißstromquelle 2a verbunden und der zweite Schweißbrenner 4b ist über ein zweites Schlauchpaket 3b mit einer zweiten Schweißstromquelle 2b verbunden. Natürlich ist dies nur beispielhaft, es könnte ebenso eine gemeinsame Schweißstromquelle 2 für beide Schweißbrenner 4a, 4b vorgesehen werden. Für jeden Schweißbrenner 4a, 4b, beispielswiese in den Schweißstromquellen 2a, 2b, sind im Wesentlichen ein erster und zweiter metallischer Zusatzstoff ZSa, ZSb, z.B. in Form von aufgewickelten Schweißdrähten 7a, 7b angeordnet, welche von dazugehörigen Vorschubeinheiten 12a, 12b zur Schweißstelle S gefördert werden. Erfindungsgemäß ist vorgesehen, dass für die metallischen Zusatzstoffe ZSa, ZSb verschiedene Werkstoffe verwendet werden, z.B. in Form von runden Schweißdrähten 7a, 7b mit gleichen oder verschiedenen Durchmessern. Je nach Anforderung an die zu erzeugende metallische Struktur 21 können verschiedene Materialien und verschieden dimensionierte Schweißdrähte 7a, 7b kombiniert werden. Beispielsweise könnten zwei Schweißdrähte 7a, 7b aus verschiedenen Materialien mit beispielsweise unterschiedlichen mechanischen Festigkeitseigenschaften, aber mit gleichen oder auch verschiedenen Durchmessern verwendet werden.

Weiters ist vorzugsweise je Schweißbrenner 4a, 4b ein Schutzgasbehälter 5a, 5b mit einem komprimierten Schutzgas SGa, SGb vorgesehen, das in der Regel jeweils über eine Schutzgasleitung 8a, 8b dem jeweiligen Schweißbrenner 4a, 4b zugeführt wird, um jeweils eine Schutzgasglocke 9a, 9b um das geschmolzene Metall im Bereich der Schweißstelle S zu bilden. Bei Verwendung eines identischen Schutzgases SG für beide Schutzgase SGa, SGb wäre natürlich auch denkbar, dass nur ein gemeinsamer Schutzgasbehälter 5 verwendet wird. Bei einem grundsätzlich denkbaren gleichzeitigen Betrieb beider Schweißbrenner 4a, 4b kann sich auch eine gemeinsame Schutzgasglocke 9 bilden, wie in Fig.2 angedeutet. Das hängt im Wesentlichen davon ab, ob gleiche oder verschiedene Schutzgase SGa, SGb verwendet werden und von der Dimensionierung der Schweißbrenner 4a, 4b sowie von der Anordnung der Schweißbrenner 4a, 4b relativ zur Schweißstelle S und relativ zueinander. Aufgrund der erfindungsgemäßen verschiedenen Werkstoffe der beiden metallischen Zusatzstoffe ZSa, ZSb wird aber in der Regel nicht gleichzeitig mit beiden Schweißbrennern 4a, 4b geschweißt, weil man dadurch unter Umständen nicht die gewünschte Materialzusammensetzung der metallischen Struktur erreicht. Es sei jedoch angemerkt, dass grundsätzlich auch ohne Schutzgas geschweißt werden könnte und damit auch keine Schutzgasbehälter 5a, 5b und Schutzgasleitungen 8a, 8b vorgesehen sein müssten.

Die beiden Schweißbrenner 4a, 4b werden erfindungsgemäß zeitlich sequentiell verwendet, also jeweils für eine bestimmte Zeitdauer der erste Schweißbrenner 4a oder nur der zweite Schweißbrenner 4b und danach jeweils der andere Schweißbrenner 4a, 4b. Dadurch kann eine metallische Struktur 21 mit einem schichtweisen Aufbau verschiedener metallischer Zusatzstoffe ZSa, ZSb erzeugt werden. Dabei werden zur Erzeugung einer Schweißnaht 10a, 10b die Schweißdrähte 7a, 7b jeweils zeitlich abwechselnd mit einem Schweißstrom la, Ib beaufschlagt und in Richtung des Grundwerkstoffs G gefördert. Bei Berührung Schweißdrähte 7a, 7b mit dem Grundwerkstoff G wird in bekannter Weise jeweils ein Lichtbogen 11a, 11b zwischen dem jeweiligen Schweißbrenner 4a, 4b und dem Grundwerkstoff G gezündet, der den jeweiligen Schweißdraht 7a, 7b abschmilzt. Um den Lichtbogen 11a, 11b zu zünden (und während des Schweißprozesses aufrecht zu halten) wird wiederum, wie bereits beschrieben, an den Grundwerkstoff G mittels Masseleitungen 18a, 18b jeweils ein zweites Potential, z.B. Massepotential, angelegt. Die Form und Größe der Schweißnähte 10a, 10b wird im Wesentlichen durch Schweißparameter wie z.B. Zusatzstoff- bzw. DrahtVorschubgeschwindigkeit v_{da}, v_{db} des jeweiligen Schweißbrenners 4a, 4b, Schweißstrom la, lb, Schweißgeschwindigkeit vₛₐ, v_{sb} des jeweiligen Schweißbrenners 4a, 4b relativ zum Grundwerkstoff G, etc. bestimmt.

Das bedeutet, dass bei aktiviertem ersten Schweißbrenner 4a der erste metallische Zusatzstoff ZSa (der beim MSG-Verfahren zugleich die Elektrode ausbildet) der Schweißstelle S zugeführt wird und im, zwischen Grundwerkstoff G (oder einer bereits geschweißten Schweißnaht) und erstem Zusatzstoff ZSa brennenden ersten Lichtbogen 11a abgeschmolzen wird. Wenn die gewünschte erste Schweißnaht 10a oder der gewünschte Teil der metallischen Struktur 21 bestehend aus dem Material des ersten Zusatzstoffs ZSa fertiggestellt wurde, wird auf den zweiten Schweißbrenner 4b umgeschaltet, wobei der erste Schweißbrenner 4a deaktiviert wird (Drahtvorschub und Schweißstrom), sodass kein erster Lichtbogen 11a mehr brennt. Mit dem zweiten Schweißbrenner 4b wird dann analog wie mit dem ersten Schweißbrenner 4a der Schweißprozess, beispielsweise an der gleichen Stelle fortgesetzt. Es wird also der zweite metallische Zusatzstoff ZSa (der beim MSG-Verfahren zugleich die Elektrode ausbildet) des zweiten Schweißbrenners 4b der Schweißstelle S zugeführt und im, zwischen dem Grundwerkstoff G (oder einer bereits geschweißten Schweißnaht) und dem zweitem Zusatzstoff ZSa brennenden zweiten Lichtbogen 11b abgeschmolzen.

Wenn statt dem MSG-Prozess ein WIG-Prozess für einen oder beide Schweißbrenner 4a, 4b vorgesehen ist, werden der erste und/oder der zweite metallische Zusatzstoff ZSa, ZSb nicht zugleich als abschmelzende Elektroden verwendet, sondern es wird eine nichtabschmelzende Elektrode (z.B. Wolfram-Elektrode) verwendet und die metallischen Zusatzstoffe ZSa, ZSb werden separat der Schweißstelle S zugeführt, z.B. mittels geeigneten Zuführeinheiten. Der erste und/oder zweite Lichtbogen 11a, 11b brennen dann zwischen der (Wolfram-)Elektrode und dem Grundwerkstoff G (oder einer bereits vorhandenen Schweißnaht, auf die aufgeschweißt wird).

Je nach Anordnung der Schweißbrenner 4a, 4b relativ zueinander und relativ zum Grundwerkstoff G kann sich ein Überschneidungsbereich 23 zwischen den Schweißnähten 10a, 10b ergeben, wie durch den schraffierten Bereich in Fig.2 symbolisiert ist. Maßgebend dafür ist insbesondere ein Berührpunktabstand I_{B} zwischen Berührpunkten Ba, Bb der Schweißdrähte 7a, 7b mit dem Grundwerkstoff G sowie ein Schweißdrahtwinkel β zwischen den Schweißdrähten 7a, 7b. Die Größe dieses Überschneidungsbereichs 23 kann damit beispielsweise beeinflusst werden, indem der Berührpunktabstand I_{B} und/oder der Schweißdrahtwinkel β verändert wird/werden. Dazu könnten beispielsweise die Schweißbrenner 4a, 4b relativ zueinander bewegt werden oder es könnte im jeweiligen Schweißbrenner 4a, 4b eine geeignete Verstelleinrichtung mit entsprechend geeigneter Aktuatorik vorgesehen sein, um z.B. die Lage des jeweiligen Schweißdrahtes 7a, 7b relativ zum Schweißbrenner 4a, 4b zu verändern, wodurch sich der Berührpunktabstand I_{B} und/oder der Schweißdrahtwinkel β verändert. Im einfachsten Fall fallen die Berührpunkte Ba, Bb aber in einem gemeinsamen Berührpunkt zusammen, wobei der Berührpunktabstand I_{B} in diesem Fall zu Null wird. Die Schweißdrähte 7a, 7b werden dann abwechselnd dem selben Berührpunkt zugeführt (der sich während des Schweißverfahrens natürlich relativ zum Grundwerkstoff bewegen kann).

Natürlich wäre es auch denkbar, dass die beiden Schweißbrenner 4a, 4b nicht so wie in Fig.2 dargestellt in Querrichtung, also quer zur Schweißrichtung, nebeneinander angeordnet sind, sondern in Längsrichtung, also in Schweißrichtung hintereinander angeordnet sind. Für das sequentielle Schweißen mit beiden Schweißbrennern 4a, 4b ist die Anordnung im Wesentlichen unerheblich, weil je nach vorgegebener Materialzusammensetzung der metallischen Struktur 21 jeweils der gewünschte Schweißbrenner 4a oder 4b an die Stelle geführt wird, wo geschweißt werden soll. Insbesondere wenn ein Doppel-Schweißbrenner 27 vorgesehen ist, können die beiden Schweißdrähte 7a, 7b aber auch im Wesentlichen parallel zueinander und in einem bestimmten Abstand voneinander beabstandet verlaufen, sodass der Berührpunktabstand I_{B} zwischen Berührpunkten Ba, Bb der Schweißdrähte 7a, 7b mit dem Grundwerkstoff G es ausreichend groß ist, dass es zu keiner Überschneidung kommt. Die Schweißdrähte 7a, 7b werden dann zur Herstellung der metallischen Struktur 21 jeweils abwechselnd zur Schweißstelle bewegt, beispielsweise von einer geeigneten Kinematik, wie später noch erläutert wird.

In der Schweißanordnung 20 ist auch eine Optik 22 zur Erzeugung eines Laserstrahls L vorgesehen, die im dargestellten Beispiel zentral zwischen den beiden Schweißbrennern 4a, 4b angeordnet ist, um den Laserstrahl L der Schweißstelle S zuzuführen. Die Optik 22 kann z.B. von einer Optiksteuereinheit 24 angesteuert und mit der erforderlichen Energie zur Erzeugung des Laserstrahls L angesteuert werden. Im dargestellten Beispiel ist zusätzlich eine übergeordnete Gesamtsteuerungseinheit 25 vorgesehen, die mit den, vorzugsweise in der jeweiligen Schweißstromquelle 2a, 2b angeordneten Steuerungseinheiten 14a, 14b der Schweißbrenner 4a, 4b kommunizieren. Dadurch könnte beispielsweise eine übergeordnete Zentral-Benutzerschnittstelle 26 vorgesehen sein, über welche ein Benutzer die Schweißanordnung 20 bedienen kann. Die Optik 22 kann relativ zu einem oder zu beiden Schweißbrennern 4a, 4b beweglich oder unbeweglich ausgeführt sein. Im Fall einer beweglichen Optik 22 kann die Verstellung des Laserstrahls L beispielsweise mittels einer geeigneten, nicht dargestellten Optikbewegungseinheit erfolgen, die von der Optiksteuereinheit 24 angesteuert wird und die gesamte Optik 22 relativ zu den Schweißbrennern 4a, 4b bewegt. Die Verstellung des Laserstrahls L könnte aber auch z.B. mittels einer geeigneten, in der Optik integrierten Laser-Verstelleinrichtung 29 erfolgen, wobei in diesem Fall die Optik 22 selbst nicht notwendigerweise bewegbar sein muss.

Im einfachsten Fall sind die Optik 22 und die Schweißbrenner aber zueinander unbeweglich angeordnet und gemeinsam relativ zum Grundwerkstoff G bewegbar, beispielsweise in Form eines Doppel-Schweißbrenners 27, wie in Fig.2 angedeutet ist. Die Ausgestaltung der Schweißanordnung 20 als Doppel-Schweißbrenner 27 ist vorteilhaft, weil damit eine kompakte Einheit geschaffen wird, die räumlich bewegbar ist, um die metallische Struktur 21 herzustellen. Die Bewegung kann z.B. von einer Kinematik durchgeführt werden, an der der Doppel-Schweißbrenner 27 angeordnet ist wie später noch erläutert wird. Die Verwendung von separaten Schweißbrennern 4a, 4b hat wiederum den Vorteil, dass man sehr flexibel in der räumlichen Bewegung der Schweißbrenner 4a, 4b und relativ zueinander ist, sowie ggf. auch relativ zur Optik 22. Allerdings ist die Bewegungssteuerung bei separaten Schweißbrennern 4a, 4b im Vergleich zu einem Doppel-Schweißbrenner 27 aufwändiger, da die Schweißbrenner 4a, 4b vorzugsweise jeweils von einer eigenen Kinematik bewegt werden.

Die übergeordnete Zentral-Benutzerschnittstelle 26 könnte dann die Benutzerschnittstellen 17a, 17b zur Bedienung der beiden Schweißbrenner 4a, 4b ersetzen oder auch zusätzlich dazu vorgesehen werden. Über die übergeordnete Zentral-Benutzerschnittstelle 26 könnten z.B. bestimmte vordefinierte Schweißprogramme ausgewählt werden oder es könnten spezifische Schweißprogramme an die übergeordnete Gesamtsteuerungseinheit 25 übertragen werden. Beispielsweise wäre es denkbar, 3D-CAD-Modelle extern zu generieren und die entsprechenden Daten über die übergeordnete Zentral-Benutzerschnittstelle 26 einzulesen und von der Schweißanordnung 20 vorzugsweise automatisiert herstellen zu lassen.

Um eine insbesondere dreidimensionale metallische Struktur 21 zu erzeugen, sind die Schweißbrenner 4a, 4b und die Optik 22 relativ zum Grundwerkstoff G bewegbar. Diese Relativbewegung kann erreicht werden, indem die Schweißbrenner 4a, 4b und die Optik 22 ortsfest angeordnet werden und der Grundwerkstoff G relativ dazu bewegt wird, beispielsweise indem der Grundwerkstoff G auf einer (nicht dargestellten) beweglichen Grundplatte angeordnet wird, welche vorzugsweise zumindest in drei orthogonalen Bewegungsachsen bewegt werden kann. Dazu könnte die Grundplatte beispielsweise von entsprechenden Antriebseinheiten, wie z.B. Linearmotoren oder dergleichen angetrieben werden, welche von einer Grundplatten-Steuerungseinheit angesteuert werden, welche wiederum z.B. mit der übergeordnete Gesamtsteuerungseinheit 25 verbunden sein könnte. Besonders bevorzugt ist die Grundplatte zusätzlich zur translatorischen Bewegung in den Bewegungsachsen auch rotatorisch um die jeweilig verfügbaren Bewegungsachsen bewegbar, wodurch metallische Strukturen 21 größerer Komplexität erzeugt werden können.

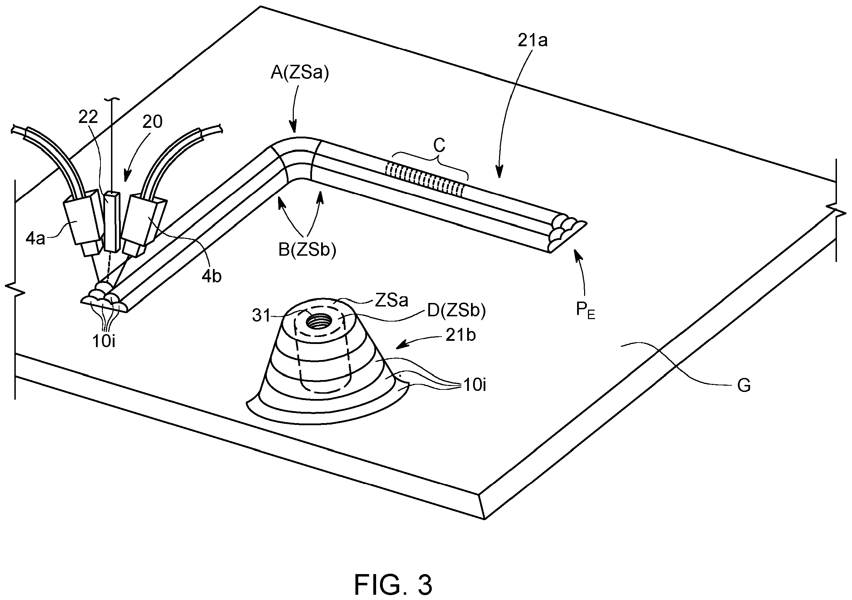

Die Relativbewegung kann andererseits auch erreicht werden, indem der Grundwerkstoff G ortsfest angeordnet wird und die Schweißbrenner 4a, 4b und die Optik 22 relativ dazu bewegt werden, so wie in Fig.2 und Fig.3 dargestellt ist. Dazu können die Schweißbrenner 4a, 4b beispielsweise wie beschrieben in einem gemeinsamen Doppel-Schweißbrenner 27 integriert sein, wie in Fig.2 schematisch dargestellt ist und der Doppel-Schweißbrenner 27 könnte im Raum bewegt werden. Die Optik 22 könnte dann natürlich ebenfalls im Doppel-Schweißbrenner 27 integriert sein, so wie in Fig.2 dargestellt ist, oder auch als separate Einheit vorgesehen werden. Die räumliche Bewegung erfolgt dabei wiederum vorzugsweise zumindest translatorisch in drei orthogonalen Bewegungsachsen und besonders bevorzugt zusätzlich rotatorisch um die jeweiligen Bewegungsachsen. Der Doppel-Schweißbrenner 27 kann beispielsweise auf einer in Fig.2 nicht dargestellten Kinematik, wie z.B. einem Industrieroboter, angeordnet sein und von der Kinematik bewegt werden.

Selbstverständlich kann auch sowohl der Grundwerkstoff G, als auch die Schweißbrenner 4a, 4b und die Optik 22 bewegt werden. Denkbar wäre z.B. dass eine translatorische Bewegung vom Grundwerkstoff G bzw. der Grundplatte ausgeführt wird und eine rotatorische Bewegung von den Schweißbrennern 4a, 4b und der Optik 22 (oder z.B. dem Doppel-Schweißbrenner 27 mit integrierter Optik 22) oder umgekehrt. Denkbar wäre z.B. auch, dass die Optik 22 und einer der beiden Schweißbrenner 4a, 4b in einer Einheit zusammengefasst werden und dass der zweite Schweißbrenner 4a, 4b als eigene Einheit vorgesehen wird.

Zur Steuerung des Bewegungsablaufs des Doppel-Schweißbrenners 27 (oder der separaten Schweißbrenner 4a, 4b) kann beispielsweise eine Kinematik-Steuerungseinheit 28 vorgesehen sein, welche mit der übergeordnete Gesamtsteuerungseinheit 25 verbunden ist. Es soll an dieser Stelle aber darauf hingewiesen werden, dass die anhand des Ausführungsbeispiels beschriebene Schweißanordnung 20 natürlich nur beispielhaft zu verstehen ist. Die konkrete konstruktive Ausgestaltung ist natürlich dem Fachmann überlassen, insbesondere betreffend die Bewegungssteuerung und die Steuerung der Schweißprozesse selbst, insbesondere von Schweißparametern wie z.B. Schweißstrom wird der Fachmann auf bekannte, im Stand der Technik verfügbare Technologien zurückgreifen.

Die Schweißbrenner 4a, 4b und die Optik 22 müssen aber natürlich nicht zwangsweise in einem gemeinsamen Doppel-Schweißbrenner 27 integriert sein, sondern könnten auch als separate ortsfeste oder bewegliche Einheiten ausgeführt sein, das hängt wiederum vom Einsatzgebiet ab und liegt im Ermessen des Fachmanns. Die Positionen der Schweißbrenner 4a, 4b und der Optik 22 relativ zueinander können ebenfalls fest vorgegeben, also im Wesentlichen unveränderlich sein oder veränderbar sein. Die Schweißbrenner 4a, 4b und die Optik 22 könnten z.B. fix (unbeweglich) im Doppel-Schweißbrenner 27 integriert sein, so wie in Fig.2 angedeutet, wobei in diesem Fall die Lage der Schweißbrenner 4a, 4b und der Optik 22 relativ zueinander im Wesentlichen durch die konstruktive Auslegung der Schweißanordnung 20, insbesondere des Doppel-Schweißbrenners 27 vorgegeben wird. Die Schweißbrenner 4a, 4b und die Optik 22 könnten aber auch beweglich am Doppel-Schweißbrenner 27 angeordnet werden, beispielsweise mittels geeigneten nicht dargestellten Führungselementen und/oder Drehgelenken. Dadurch könnte die Lage der Schweißbrenner 4a, 4b und der Optik 22 relativ zueinander eingestellt werden, was z.B. vor Beginn des Herstellungsprozesses der metallischen Struktur 21 geschehen kann. Das kann beispielsweise dann vorteilhaft sein, wenn sich die Randbedingungen zwischen zwei aufeinanderfolgenden Herstellungsprozessen ändern, z.B. weil sich die Geometrie der metallischen Strukturen 21 unterscheiden, andere metallischer Zusatzstoffe ZSa, ZSb verwendet werden, etc. oder es kann dadurch die Zugänglichkeit, beispielsweise zu Wartungszwecken, erleichtert werden. Während des Herstellungsprozesses der metallischen Struktur 21 wäre in diesem Fall die Lage der Schweißbrenner 4a, 4b und der Optik 22 relativ zueinander aber konstant, würde sich also nicht ändern.

Natürlich wäre es aber auch vorstellbar, dass die Schweißbrenner 4a, 4b und die Optik 22 am Doppel-Schweißbrenner 27 beweglich angeordnet sind und beispielsweise deren Lage relativ zueinander mittels (nicht dargestellten) geeigneten Antriebseinrichtungen während dem Herstellungsprozess der metallischen Struktur 21 veränderlich ist. Beispielsweise könnte der Doppel-Schweißbrenner 27 nur translatorisch bewegbar sein und die Schweißbrenner 4a, 4b und die Optik 22 könnten rotatorisch am Doppel-Schweißbrenner 27 bewegbar sein. Die Steuerung der Bewegung der Schweißbrenner 4a, 4b und der Optik 22 könnte in diesem Fall beispielsweise erfolgen, indem die Kinematik-Steuerungseinheit 28 die Antriebseinrichtungen ansteuert.

Es ist ersichtlich, dass eine Vielzahl von Kombinationen möglich ist, wie der Bewegungsablauf des Herstellungsprozesses der metallischen Struktur 21 gesteuert werden kann. Die Schweißparameter, wie z.B. die Zusatzstoff- bzw. Drahtvorschubgeschwindigkeiten v_{da}, v_{db}, die Schweißströme Iₐ, I_{b} werden vorzugsweise an den vorgegebenen Bewegungsablauf zur Erzeugung einer bestimmten Geometrie der metallischen Struktur 21 angepasst, insbesondere an die Relativgeschwindigkeit der Schweißbrenner 4a, 4b relativ zum Grundwerkstoff G.

Der von der Optik 22 erzeuget Laserstrahl L könnte beispielsweise relativ zum ersten und zweiten Schweißbrenner 4a, 4b bewegt werden (oder umgekehrt), wodurch der Laserstrahl L bei der Herstellung der metallischen Struktur 21 mehrere Aufgaben übernehmen kann. Beispielsweise kann mittels des Laserstrahls L ein Lichtbogen 11a, 11b geführt werden, wie später noch im Detail erläutert wird, wodurch die Positionsgenauigkeit der Schweißnähte 10a, 10b und folglich der metallischen Struktur 21 verbessert werden kann. Dadurch können beispielsweise kleinere Maßtoleranzen eingehalten werden. Der Laserstrahl L kann aber auch analog des bekannten Hybrid-Schweißverfahrens der Anmeldering dazu verwendet werden, den eigentlichen MSG-Schweißprozess durch einen ergänzenden Wärmeeintrag zusätzlich zum Lichtbogen 11a, 11b des MSG-Prozesses zu unterstützen. Der Laserstrahl L könnte aber auch zum Laserschweißen verwendet werden, wobei in diesem Fall der Wärmeeintrag nur durch die Energie des Laserstrahls L erfolgt, ohne dass die Schweißbrenner 4a, 4b aktiv sind, also ohne Lichtbogen 11a, 11b. Weiters kann der Laserstrahl L, so wie in Fig.2 dargestellt, im Wesentlichen zentral zwischen zwei nebeneinander geschweißten Schweißnähten, hier den beiden Schweißnähten 10a, 10b positioniert werden, wodurch Bindefehler im Gefüge zwischen den beiden Schweißnähten 10a, 10b durch den vom Laserstrahl L zugeführten Wärmeeintrag verringert, vorzugsweise vermieden werden können.

Es wäre darüber hinaus auch denkbar, dass der Laserstrahl L zum Laserschneiden der metallischen Struktur 21 und/oder des Grundstoffs G verwendet wird, wobei die metallische Struktur 21 und/oder der Grundstoff G vom Laserstrahl durchtrennt wird. Dadurch wäre es z.B. denkbar, dass eine fertige metallische Struktur 21 in mehrere einzelne Elemente geschnitten wird oder dass eine fertige metallische Struktur 21 aus dem Grundstoff G heraus geschnitten wird, beispielsweise genau entlang eines äußeren Umfangs der metallischen Struktur 21 oder entsprechend einer bestimmten geometrischen Form. Gemäß einer weiteren Anwendung kann der Laserstrahl L auch dazu verwendet werden, die Schweißnähte 10a, 10b und/oder die fertige metallische Struktur 21 an der Oberfläche zu härten und/oder zu vergüten, sofern der metallische Zusatzstoff ZSa, ZSb dazu geeignet ist, was im Wesentlichen vom Kohlenstoffgehalt der metallische Zusatzstoff ZSa, ZSb abhängt. Das kann beispielsweise auch dann erfolgen, wenn der Herstellungsprozess der metallischen Struktur 21 bereits abgeschlossen ist, also nach dem eigentlichen Schweißprozess und folglich ohne aktivierte Schweißbrenner 4a, 4b. Der Laserstrahl L wird dann über die gewünschten Bereiche der metallischen Struktur 21 geführt, die zu härten (oder zu vergüten) sind.

Unter Härten versteht man eine Wärmebehandlung von vorzugsweisem Stahl, wobei ein rasches Erhitzen gefolgt von einer raschen Abkühlung des zu härtenden Bereichs erfolgt. Dadurch wird die kristalline Struktur des Stahls verändert, wodurch die Oberflächenhärte erhöht wird. Unter Anlassen versteht man eine langsame Erwärmung, die auf das rasche Abkühlen im Zuge des Härteprozesses folgt. Das Anlassen verringert im Wesentlichen die durch das rasche Abkühlen erzeugte Sprödigkeit des Stahls. Die Kombination von Härten und Anlassen wird als Vergüten bezeichnet. Härte- und Vergüte-Prozesse sind im Stand der Technik bekannt, weshalb hier nicht näher darauf eingegangen wird. Im Kontext der Erfindung kann die für den Härteprozess erforderliche rasche Abkühlphase beispielsweise durch Einbringen eines Kühlmediums mittels einer nicht dargestellten Kühlmediums-Zuführeinheit erreicht werden. Die Kühlmediums-Zuführeinheit könnte beispielsweise wiederum von der übergeordneten Gesamtsteuerungseinheit 25 gesteuert werden. Im dargestellten Beispiel wäre es denkbar, dass die Kühlmediums-Zuführeinheit beispielsweise am Trageelement 27 angeordnet ist oder aber auch als separates Element.

Zur Führung eines Lichtbogens 11a, 11b wird der Laserstrahl L im Bereich der Schweißstelle S, vorzugsweise im Bereich des jeweiligen Berührpunktes Ba, Bb der Schweißdrähte 7a, 7b fokussiert. Der Laser L erzeugt dadurch unabhängig vom Lichtbogen 11a, 11b einen Wärmeeintrag im Grundwerkstoff G, wodurch der Grundwerkstoff G zumindest an der Oberfläche aufgeschmolzen wird. Der Lichtbogen 11a, 11b brennt dadurch zwischen dem Bereich des vom Laserstrahl L aufgeschmolzenen Materials des Grundwerkstoffes G (oder einer bereits erzeugten Schweißnaht 10a, 10b der metallischen Struktur 21, wenn schichtweise geschweißt wird) und des Schweißdrahtes 7a, 7b. Diese Führung ist insbesondere bei der Zündung des Lichtbogens 11a, 11b vorteilhaft, weil dadurch im Gegensatz zum herkömmlichen MSG-Schweißen ohne Laser-Unterstützung, eine sehr genaue initiale Positionierung des Lichtbogens 11a, 11b und folglich der Schweißnaht 10a, 10b zu Beginn des Schweißvorgangs erfolgen kann, da der Lichtbogen 11a, 11b im Wesentlichen vom Laserstrahl angezogen wird.

Die Führung des Lichtbogens 11a, 11b ist aber auch während des Schweißens, also nach bereits erfolgter Zündung des Lichtbogens 11a, 11b vorteilhaft, weil damit ein sehr stabiler Lichtbogen 11a, 11b resultiert, der nur geringen radialen Schwankungen um die Schweißstelle S während des Schweißens (in Schweißrichtung und quer dazu) unterliegt. Die Führung des Laserstrahls L bzw. insbesondere das Anziehen des Lichtbogens 11a, 11b durch den Laserstrahl L erfolgt im Wesentlichen aufgrund der starken lokalen Erwärmung des Grundwerkstoffs G (oder des Werkstoffs einer bereits vorhandenen Schweißnaht), wodurch ein ionisiertes Laserplasma erzeugt wird, durch den der Lichtbogen angezogen wird. Um aber nicht nur einen der Lichtbogen 11a, 11b führen zu können, ist es vorteilhaft, wenn der Laserstrahl L während des Schweißvorgangs relativ zu den Schweißbrennern 4a, 4b bewegbar ist. Dadurch kann beispielsweise bei einem zeitlich sequentiellen Schweißen des ersten und zweiten Schweißbrenners 4a, 4b der Laserstrahl L jeweils der Schweißstelle S zum Führen des jeweilig brennenden ersten oder zweiten Lichtbogens 11a, 11b zugeführt werden.

Wie beschrieben, kann es je nach Positionierung und Winkel der Schweißbrenner 4a, 4b, insbesondere der Schweißdrähte 7a, 7b relativ zueinander und relativ zum Grundwerkstoff G zu einem Überschneidungsbereich 23 der ersten und zweiten Schweißnaht 10a, 10b kommen, wie in Fig.2 dargestellt ist. Wenn z.B. mit beiden Schweißbrennern 4a, 4b zeitgleich geschweißt wird, wird der Überschneidungsbereich 23 der beiden Schweißnähte 10a, 10b vorzugsweise relativ klein sein (in Abhängigkeit des der Berührpunktabstandes I_{B}), sodass sich der erste und zweite Lichtbogen 11a, 11b nicht negativ beeinflussen. Beim erfindungsgemäßen zeitlich sequentiellen Schweißen können die Berührpunkte Bₐ, B_{b} beispielsweise auch in einen gemeinsamen Berührpunkt B zusammenfallen, da es zu keiner gegenseitigen Beeinflussung oder Berührung der Schweißdrähte 7a, 7b kommt weil immer nur ein Schweißbrenner 4a, 4b aktiv ist. Dadurch kann durch die Verwendung verschiedener Materialien für den ersten und zweiten Zusatzstoff ZSa, ZSb im Wesentlichen eine einzige durchgängige Schweißnaht 10 erzeugt werden, die (in Abhängigkeit der Zeit, die der jeweilige Schweißbrenner 4a, 4b aktiv ist und der Schweißgeschwindigkeit vₛₐ, v_{sb} relativ zum Grundwerkstoff G) eine abschnittsweise unterschiedliche Materialzusammensetzung aufweist, wie nachfolgend anhand Fig.3 noch im Detail erläutert wird.

Das kann insbesondere dann vorteilhaft sein, wenn einzelne Bereiche der metallischen Struktur 21 unterschiedliche Anforderungen bezüglich Festigkeit haben. In Fig.2 ist der Laserstrahl L so dargestellt, dass er in einen Bereich zentral zwischen den beiden Schweißnähten 10a, 10b fokussiert wird, beispielsweise um, wie beschrieben, Bindefehler zwischen den beiden Schweißnähten 10a, 10b zu vermeiden. Wenn der Laserstrahl L relativ zu den Schweißbrennern 4a, 4b beweglich ist, kann der Laserstrahl L z.B. zur Führung des ersten Lichtbogens 11a verwendet werden oder zur Führung des zweiten Lichtbogens 11b verwendet werden, wie in Fig.2 anhand der Laserstrahlen Lₐ, L_{b} dargestellt ist. Im dargestellten Beispiel ist der Laserstrahl L damit in einem im Wesentlichen kegelförmigen Strahlbereich mit einem Strahlwinkel α um die Schweißstelle S bewegbar. Das ist natürlich nur beispielhaft und hängt auch von der konkreten Ausführung der Optik 22 ab. Die Beweglichkeit des Laserstrahls L kann dabei, wie beschrieben, durch eine Veränderung einer Position und/oder eines Winkels der gesamten Optik 22 erreicht werden, z.B. durch Ansteuerung der Optikbewegungseinheit oder es könnte eine geeignete Laser-Verstelleinrichtung 29 in der Optik 22 vorgesehen werden, mit der der Lasestrahl L bewegt werden kann, beispielsweise in Form eines geeigneten verstellbaren Spiegels oder einer oder mehrerer geeigneter Linsen.

Natürlich kann auch ein Fokus des Laserstrahls L mittels der Optik 22 verändert werden, beispielsweise um den Bereich des Wärmeeintrags zu verändern, insbesondere eine Fläche und eine Tiefe des vom Laserstrahl L erzeugten Wärmeeintrags. Zur Verstellung des Fokus des Laserstrahls L ist vorzugsweise eine geeignete, nicht dargestellte Fokussiereinrichtung in der Optik 22 vorgesehen, beispielsweise in Form zueinander beweglichen Linsen.

Der Laserstrahl L könnte z.B. analog des Hybrid-Schweißverfahrens zur Unterstützung des MSG-Schweißverfahrens der Schweißbrenner 4a, 4b verwendet werden, wobei der Fokus des Laserstrahls L vorzugsweise so gewählt wird, dass ein schmaler und tiefer Wärmeeintrag erfolgt (kleine Fläche, große Tiefe). Für andere Zwecke, wie z.B. Härten, Anlassen oder für die in Fig.2 dargestellte zentrale Position des Laserstrahls L im Bereich zwischen den Schweißnähten 10a, 10b zur Vermeidung von Bindefehlern kann es vorteilhaft sein, wenn der Fokus des Laserstrahls L so gewählt wird, dass sich ein im Vergleich breiterer und flacherer Wärmeeintrag ergibt, um das Material nicht oder nur in geringem Maße aufzuschmelzen. Die Variabilität der Fokuseinstellung hängt natürlich wiederum von der konkreten Ausführung der Optik 22 bzw. der Fokussiereinrichtung ab.

Es wäre auch denkbar, dass der Laserstrahl L, z.B. von einer, in der Optik 22 vorgesehenen Laser-Teileinrichtung 30, beispielsweise einem optischen Prisma, in zumindest einen ersten Teil-Laserstrahl L_{Ta} und einen zweiten Teil-Laserstrahl L_{Tb} geteilt wird, wobei der erste Teil-Laserstrahl L_{Ta} der Schweißstelle S vorzugsweise zum Führen des ersten oder zweiten Lichtbogens 11a, 11b zugeführt wird und der zweite Teil-Laserstrahl L_{Tb} der Schweißstelle S z.B. zur Vermeidung von Bindefehlern zugeführt wird. Dadurch kann der Herstellprozess der metallischen Struktur noch flexibler gestaltet werden. Die konkrete Ausgestaltung der Laser-Teileinrichtung 30 spielt für die Erfindung keine Rolle, vorstellbar wäre z.B. eine geeignete Linse oder Spiegel etc.

Die Laser-Teileinrichtung 30 und auch die Fokussiereinrichtung könnten als separate Einheiten in der Optik 22 vorgesehen sein, könnten aber auch z.B. integral mit der Laser-Verstelleinrichtung 29 ausgeführt sein. Vorzugsweise sind natürlich auch die Teil-Laserstrahlen L_{Tb}, L_{Ta} wiederum bewegbar, sodass sich analog des in Fig.2 dargestellten, im Wesentlichen kegelförmigen Strahlbereichs des Laserstrahls L zwei (nicht dargestellte) beispielsweise wiederum im Wesentlichen kegelförmige Strahlbereiche mit jeweils einem Strahlwinkel α_{Ta}, α_{Tb} ergibt. Der jeweilige Fokus der Teil-Laserstrahlen L_{Tb}, L_{Ta} ist vorzugsweise ebenfalls veränderlich, beispielsweise mittels separater Teil-Laserstrahl-Fokussiereinrichtungen. Die Laser-Verstelleinrichtung 29, die (Teil-Laserstrahl-) Fokussiereinrichtung und die Laser-Teileinrichtung 30 werden vorzugsweise von der Optiksteuereinheit 24 angesteuert, welche ihrerseits z.B. von der übergeordneten Gesamtsteuerungseinheit 25 angesteuert wird. Analog des Laserstrahls L können auch die Laserstrahlen L_{Tb}, L_{Ta} wiederum die bereits beschriebenen Funktionen erfüllen, also z.B. zum Laserschweißen, Laser-Hybrid-Schweißen, Laserschneiden Härten etc. verwendet werden, wodurch das Verfahren noch flexibler wird.

In Fig.3 ist ein Grundwerkstoff G in Form einer ebenen Platte dargestellt, auf dem eine erste metallische Struktur 21a und eine zweiten metallische Struktur 21b aufgeschweißt sind. Die Schweißanordnung 20 kann wie anhand Fig.2 beschrieben ausgeführt sein und ist hier nur mehr schematisch dargestellt. Die Schweißanordnung 20 könnte beispielsweise, so wie in Fig.2 dargestellt einen (nicht dargestellten) Doppel-Schweißbrenner 27 aufweisen, das z.B. von einer geeigneten Kinematik bewegt wird. Es könnten aber auch der erste Schweißbrenner 4a, der zweite Schweißbrenner 4b und die Optik 22 getrennt voneinander räumlich bewegt werden, beispielsweise jeweils auf einer eigenen Kinematik angeordnet.

Die erste metallische Struktur 21a ist hier im Wesentlichen L-förmig ausgeführt und aus mehreren, insbesondere sechs Schweißnähten 10i schichtweise aufgebaut. Um die dargestellte erste metallische Struktur 21a herzustellen werden vorzugsweise zuerst drei Schweißnähte 10i nebeneinander auf den Grundwerkstoff G aufgeschweißt, indem die dargestellte Schweißanordnung 20 das im Wesentlichen L-förmige Profil abfährt. Die Bewegung wird, wie bereits beschrieben, vorzugsweise von einer gemeinsamen (oder mehreren unabhängigen) Kinematik - wie beispielsweise einem Schweißroboter - durchgeführt, welche z.B. von der übergeordneten Gesamtsteuerungseinheit 25 gesteuert wird. Das, hier L-förmige, Profil kann beispielsweise über die Benutzerschnittstelle 26 vorgegeben werden, z.B. in Form eines CAD-Modells. Die drei nebeneinanderliegenden Schweißnähte 10i der untersten Reihe der ersten metallischen Struktur 21a können beispielsweise hergestellt werden, indem zuerst die drei untersten Schweißnähte 10i in jeweils zeitlich hintereinander von einem Anfangspunkt P_{A} bis zu einem Endpunkt P_{E} entlang des L-förmigen Profils (jeweils in Querrichtung versetzt) geschweißt werden, danach die mittleren Schweißnähte 10i wiederum zeitlich nacheinander vom Anfangspunkt P_{A} zum Endpunkt P_{E} und zuletzt die oberste Schweißnaht 10i in einem darauffolgenden Arbeitsschritt vom Anfangspunkt P_{A} zum Endpunkt P_{E} geschweißt wird.

Für eine Verkürzung der Bearbeitungszeit kann es vorteilhaft sein, wenn z.B. nach Beendigung der ersten Schweißnaht 10i der untersten Reihe die Schweißanordnung 20 nicht wieder zurück zum Anfangspunkt P_{A} bewegt wird, sondern dass die zweite (z.B. die mittlere) Schweißnaht 10i der untersten Reihe in umgekehrter Richtung, vom Endpunkt P_{E} zum Anfangspunkt P_{A} entlang des L-förmige Profils geschweißt wird. Die dritte (z.B. äußere) Schweißnaht 10i, kann dann wieder vom Anfangspunkt P_{A} zum Endpunkt P_{E} geschweißt werden usw. Der Schweißprozess könnte in diesem Fall auch kontinuierlich erfolgen, also ohne Absetzen zwischen Beendigung einer Schweißnaht 10i und Start einer neuen Schweißnaht 10i.Wenn eine längere Abkühlphase erforderlich ist, kann der Schweißvorgang derSchweißnähte10i aber auch jeweils vom Anfangspunkt P_{A} zum Endpunkt P_{E} durchgeführt werden, wobei die Schweißanordnung 20 nach dem Schweißen jeweils wieder vom Endpunkt P_{E} zurück zum Anfangspunkt P_{A} bewegt wird.

In der erfindungsgemäßen Schweißanordnung 20 des dargestellten Beispiels sind zwei Schweißbrenner 4a, 4b mit verschiedenen metallischen Zusatzstoffen ZSa, ZSb vorgesehen. Beispielsweise kann im ersten Schweißbrenner 4a ein erster metallischer Zusatzstoff ZSa verwendet werden, der im Vergleich zum zweiten Zusatzstoff ZSb des zweiten Schweißbrenners 4b, eine höhere (oder niedrigere) mechanische Festigkeit aufweist. Dadurch kann beispielsweise ein erster (mittlerer) Abschnitt A der ersten metallischen Struktur 21a erzeugt werden, der aus dem Material des ersten metallischen Zusatzstoffs ZSa mit bestimmten mechanischen Festigkeitseigenschaften besteht. Die restlichen zweiten Abschnitte B der ersten metallischen Struktur 21a bestehen im dargestellten Beispiel aus dem Material des zweiten metallischen Zusatzstoffs ZSb mit gegenüber dem ersten Abschnitt A unterschiedlichen mechanischen Festigkeitseigenschaften. Es ist ersichtlich, dass man damit eine sehr hohe Flexibilität hinsichtlich der Materialzusammensetzung bei der Herstellung einer metallischen Struktur 21 erreicht.

Die Herstellung der dargestellten metallischen Struktur 21a kann beispielsweise erfolgen, indem zuerst ausgehend vom Anfangspunkt P_{A} mit dem ersten Schweißbrenner 4b die erste Schweißnaht 10i der untersten Reihe mit dem zweiten metallischen Zusatzstoff ZSb kontinuierlich bis zum Beginn des ersten Abschnitts A geschweißt wird, wobei die Bewegungssteuerung vorzugsweise von der Kinematik-Steuerungseinheit 28 oder der Gesamtsteuerungseinheit 25 durchgeführt wird. Am Beginn des ersten Abschnitts A erfolgt ein Umschalten vom zweiten Schweißbrenner 4b auf den ersten Schweißbrenner 4a, mit dem die Schweißnaht 10i, bestehend aus dem ersten Zusatzstoff ZSa bis zum Ende des ersten Abschnitts A fortgesetzt wird. Danach erfolgt wiederum ein Umschalten vom ersten Schweißbrenner 4a auf den zweiten Schweißbrenner 4b und ein Fertigschweißen der ersten Schweißnaht 10i bis zum Endpunkt P_{E}. Danach wird die zweite, z.B. die mittlere Schweißnaht der untersten Reihe in analoger Weise hergestellt usw. Zum Umschalten zwischen den Schweißbrennern 4a, 4b wird die Schweißanordnung 20 kurz angehalten, wobei jeweils ein Schweißbrenner 4a oder 4b deaktiviert wird und der jeweils andere Schweißbrenner 4a oder 4b aktiviert wird. Natürlich erfolgt dabei ein Stoppen bzw. Starten des Drahtvorschubs, der Energiezufuhr, etc. wie bei einem herkömmlichen MSG-Schweißprozess, sodass immer nur ein Lichtbogen 11a oder 11b des entsprechenden Schweißbrenners 4a oder 4b brennt, der gerade verwendet wird. In dieser Weise können natürlich beliebige dreidimensionale Geometrien hergestellt werden, die auch wesentlich komplexer sein können, als das gezeigte L-förmige Profil. Denkbar wäre z.B. auch, sofern es die Platzverhältnisse erlauben, dass ein dritter Schweißbrenner 4c mit einem weiteren dritten metallischen Zusatzstoff ZSc vorgesehen wird, wodurch die Materialzusammensetzung der metallischen Struktur 21 noch besser auf bestimmte Anforderungen abgestimmt werden kann.

Im dritten Abschnitt C der ersten metallischen Struktur 21a wurde die Oberfläche mittels des Laserstrahls L gehärtet, wie bereits anhand Fig.2 beschrieben wurde. Dazu kann z.B. die Optik 22 nach Beendigung des MSG-Schweißprozesses, also nachdem die oberste Schweißnaht 10i geschweißt wurde, im gewünschten Abschnitt, hier im dritten Abschnitt C, entlang der Schweißnaht 10i bewegt werden und der Laserstrahl L erzeugt einen Wärmeeintrag in der obersten Schweißnaht 10i, wodurch sich das metallische Gefüge der obersten Schweißnaht 10i verändert. Vorzugsweise die vom Laserstrahl L erhitzte Zone kurz nach dem erfolgten Wärmeeintrag wieder rasch abgekühlt, um den Härteprozess zu beenden, beispielsweise durch Zuführen eines geeigneten Kühlmediums mittels einer (nicht dargestellten) Kühlmediums-Zuführeinheit. Ggf. kann danach wie beschrieben ein erneutes Anlassen erfolgen, um die Sprödigkeit des gehärteten dritten Abschnitts C zu verringern.

Wenn der Laserstrahl L beweglich ausgeführt ist, z.B. durch eine bewegliche Optik 22, kann der Härteprozess weiter verbessert werden, weil der Laserstrahl L besser an die Geometrie der metallischen Struktur 21 angepasst werden kann. Z.B. könnte der Laserstrahl L im dargestellten Beispiel besser entlang der, im Wesentlichen halbzylinderförmigen Oberfläche der obersten Schweißnaht 10i bewegt werden, wodurch ein besseres Abtasten der gesamten Oberfläche möglich ist, wodurch eine sehr gleichmäßige Einhärtetiefe über die gesamte Oberfläche der obersten Schweißnaht 10i erreicht werden kann. Die erste metallische Struktur 21a des dargestellten Beispiels weist eine relativ einfache Geometrie auf, je komplexer die Geometrie einer metallischen Struktur ist, desto größer sind die Vorteile, durch die erfindungsgemäße Schweißanordnung 20, insbesondere durch die Bewegungsfreiheitsgrade der Schweißbrenner 4a, 4b (bis 4i) und der Optik 22, insbesondere des Laserstrahls L relativ zueinander und relativ zur Schweißstelle S.

Eine weitere vorteilhafte Anwendung der Schweißanordnung 20 ist anhand der zweiten metallischen Struktur 21b in Fig.3 dargestellt. Die zweite metallische Struktur 21b weist im Wesentlichen eine Form eines Kegelstumpfes auf und ist aus mehreren übereinander angeordneten Schichten von Schweißnähten 10i aufgebaut. Beispielsweise können die Schichten jeweils als eine spiralförmig verlaufende Schweißnaht 10i ausgeführt werden oder in Form von mehreren Schweißnähten 10i in Form von konzentrischen Kreisen. Grundsätzlich ist der Bewegungsablauf aber frei wählbar und liegt im Ermessen eines zuständigen Benutzers.

Die zweite metallische Struktur 21b ist hier so ausgeführt, dass in einem zentralen, im Wesentlichen zylinderförmigen Bereich D (in Fig.3 gestrichelt) ein zweiter metallischer Zusatzstoff ZSb vorgesehen ist, der eine höhere mechanische Festigkeit aufweist als das restliche, den Bereich D umgebende Material aus dem ersten metallischen Zusatzstoff ZSa. Im zentralen Bereich D höherer Festigkeit, ist eine Bohrung 31 mit einem Gewinde angeordnet, in welches eine (nicht dargestellte) Schraube eingeschraubt werden kann, z.B. zur Befestigung eines beliebigen Bauteils. Vorzugsweise wird zuerst das gesamte Volumen inkl. des Bereichs D höherer Festigkeit ausgeschweißt und die Bohrung wird anschließend angefertigt. Die Herstellung der zweiten metallischen Struktur 21b kann wiederum so erfolgen, wie anhand der ersten metallischen Struktur 21a erläutert wurde. Beispielsweise könnte mit dem ersten Schweißbrenner 4a am Grundwerkstoff G spiralförmig kontinuierlich von außen nach innen geschweißt werden um den radial äußeren Bereich der untersten Lage der zweiten metallischen Struktur 21b herzustellen. Danach könnte vom ersten Schweißbrenner 4a auf den zweiten Schweißbrenner 4b umgeschaltet werden, um den zentralen Bereich zu schweißen, der aus dem zweiten metallischen Zusatzstoff ZSb besteht. Es könnten aber auch jeweils kleiner werdende konzentrische Kreise von außen nach innen zuerst mit dem ersten Schweißbrenner 4a und danach im zentralen Bereich mit dem zweiten Schweißbrenner 4b geschweißt werden (oder umgekehrt). Der Vorgang wird dann schichtweise mit kleineren Kreisen wiederholt, bis die gewünschte Form der zweiten metallischen Struktur 21b fertiggestellt ist. In der obersten Lage der dargestellten zweiten metallischen Struktur 21b ist beispielsweise nur noch ein relativ schmaler Randbereich aus dem Material des ersten Zusatzstoffs ZSa hergestellt, wobei der zentrale im Wesentlichen zylinderförmige Bereich D aus dem Material des zweiten Zusatzstoffs ZSb besteht, wobei vorzugsweise ein hochfestes Material gewählt wird, um ausreichend hohe Festigkeit für das dargestellte Gewinde zu bieten.

Zusätzlich könnte nach Fertigstellung des Schweißverfahrens bzw. der Herstellung der zweiten metallischen Struktur 21b natürlich auch eine weitere mechanische Bearbeitung erfolgen, beispielsweise Fräsen, um eine plane Oberfläche zu erhalten. Insbesondere wenn auf die Schraube relativ hohen Belastungen wirken, kann es notwendig sein, ein entsprechendes Gewinde mit einer für die Belastung geeigneten Festigkeit vorzusehen. Da in der Regel Materialien höherer Festigkeit teurer sind als Materialien geringerer Festigkeit, ist es vorteilhaft, wenn nicht das gesamte Volumen der zweiten metallischen Struktur 21b aus dem hochfesten Material des zweiten metallischen Zusatzstoffs ZSb hergestellt wird, sondern, so wie dargestellt, nur ein ausgewählter Bereich D. Zwischen dem zentralen Bereich D und dem umgebenden Material liegt eine sehr gute stoffschlüssige Verbindung aufgrund des Schweißprozesses vor, was vorteilhaft gegenüber anderen Arten der Verbindung ist, wie z.B. einer Pressverbindung oder andersartigen mechanischen Verbindung. Dadurch können metallische Strukturen 21 mit lokal auf bestimmte mechanische Randbedingungen angepassten Bereichen erzeugt werden, wodurch z.B. Herstellkosten bei gleichbleibender Qualität eingespart werden können oder die Qualität bei gleichbleibenden Herstellkosten erhöht werden kann. Will man beispielsweise die erzeugte zweite metallische Struktur 21b als separates Bauteil haben, könnte wie beschrieben, der Laserstrahl L (oder die Teil-Laserstrahlen L_{Tb}, L_{Ta}) zum Laserschneiden verwendet werden und die zweite metallische Struktur 21b aus dem Grundstoff G herausschneiden, z.B. entlang des äußeren Umfangs der untersten ersten Schweißnaht 10i.

Die beschriebenen Ausführungsformen sind natürlich nur beispielhaft zu verstehen und nicht abschließend. Die konkrete konstruktive Umsetzung der Schweißanordnung 20 hinsichtlich Anzahl, Anordnung und Freiheitsgraden der Schweißbrenner 4a, 4b (bis 4i) und der Optik 22, Wahl der Schutzgase SGa, SGb und der Zusatzstoffe ZSa, ZSb, etc. liegt natürlich im Ermessen des Fachmannes.

Das Verfahren ist aber nicht auf das anhand der Figuren beschriebene Beispiel beschränkt. Es könnte für einen oder für beide Schweißbrenner 4a, 4b statt des MSG-Schweißprozesses auch z.B. der bekannte WIG-Schweißprozess verwendet werden. In diesem Fall würde nicht der Schweißdraht 7a, 7b gleichzeitig als metallischer Zusatzstoff ZSa, ZSb und abschmelzende Elektrode verwendet werden, sondern es würde eine hochtemperaturfeste, nichtabschmelzende Elektrode am Schweißbrenner 4a, 4b vorgesehen werden, z.B. eine Wolfram-Elektrode. Der Lichtbogen 11a, 11b würde dann zwischen der Wolfram-Elektrode und dem Grundstoff G gezündet werden und der metallische Zusatzstoff ZSa, ZSb würde der Schweißstelle S separat zugeführt werden, mittels einer geeigneten ersten und zweiten Zuführeinheit. Da das WIG-Schweißverfahren grundsätzlich bekannt ist, wird an dieser Stelle nicht im Detail darauf eingegangen. Natürlich wäre es auch denkbar, dass die Schweißanordnung 20 für eine Kombination aus MSG- und WIG-Schweißprozess vorgesehen wird, wobei z.B. der erste Schweißbrenner 4a als MSG-Schweißbrenner und der zweite Schweißbrenner 4b als WIG-Schweißbrenner ausgeführt wird. Damit können die Vorteile beider Schweißverfahren genutzt werden.

## Patentansprüche

1. Verfahren zum automatisierten Herstellen dreidimensionaler metallischer Strukturen (21, 21a, 21b) auf einem metallischen Grundwerkstoff (G), wobei ein erster metallischer Zusatzstoff (ZSa) einer Schweißstelle (S) zugeführt wird, der zumindest mittels eines, zwischen einer ersten Elektrode und dem Grundwerkstoff (G) erzeugten ersten Lichtbogens (11a) zum Herstellen einer ersten Schweißnaht (10a) an der Schweißstelle (S) abgeschmolzen wird und wobei der Schweißstelle (S) ein Laserstrahl (L) zugeführt wird, wobei der Schweißstelle (S) ein zweiter metallischer Zusatzstoff (ZSb) zugeführt wird, der zumindest mittels eines zwischen einer zweiten Elektrode und dem Grundwerkstoff (G) erzeugten zweiten Lichtbogens (11b) zum Herstellen einer zweiten Schweißnaht (10b) an der Schweißstelle (S) abgeschmolzen wird, wobei als erster metallischer Zusatzstoff (ZSa) und als zweiter metallischer Zusatzstoff (ZSb) verschiedene Werkstoffe verwendet werden, **dadurch gekennzeichnet, dass** der erste metallische Zusatzstoff (ZSa) und der zweite metallische Zusatzstoff (ZSb) der Schweißstelle (S) zeitlich sequentiell zugeführt werden und im Bereich der Schweißstelle (S) im jeweils brennenden ersten oder zweiten Lichtbogen (11a, 11b) abgeschmolzen werden, um die dreidimensionale metallische Struktur (21, 21a, 21b) zu bilden.

2. Verfahren nach Anspruch 1, **dadurch gekennzeichnet, dass** als erster metallischer Zusatzstoff (ZSa) und als zweiter metallischer Zusatzstoff (ZSb) Schweißdrähte (7a, 7b) gleicher oder verschiedener Dimension verwendet werden, vorzugsweise Schweißdrähte (7a, 7b) mit rundem Querschnitt und einem Durchmesser zwischen 0,1 und 5 Millimeter, insbesondere zwischen 0,8 und 2mm.

3. Verfahren nach Anspruch 1 oder 2, **dadurch gekennzeichnet, dass** der erste metallische Zusatzstoff (ZSa) mit einer vorgegebenen ersten Drahtvorschubgeschwindigkeit (v_{da}) der Schweißstelle (S) zugeführt wird und/oder der zweite metallische Zusatzstoff (ZSb) mit einer vorgegebenen zweiten Drahtvorschubgeschwindigkeit (v_{db}) der Schweißstelle (S) zugeführt wird, wobei die erste Drahtvorschubgeschwindigkeit (v_{da})und die zweite Drahtvorschubgeschwindigkeit (v_{db}) gleich groß oder verschieden zwischen 2m/min und 25m/min festgelegt werden.

4. Verfahren nach einem der Ansprüche 1 bis 3, **dadurch gekennzeichnet, dass** der erste metallische Zusatzstoff (ZSa), der zweite metallische Zusatzstoff (ZSb) und der Laserstrahl (L) gemeinsam relativ zum Grundwerkstoff (G) bewegt werden und/oder dass der Grundwerkstoff (G) relativ zum ersten metallischen Zusatzstoff (ZSa), zweiten metallische Zusatzstoff (ZSb) und Laserstrahl (L) bewegt wird und/oder dass zumindest der erste metallische Zusatzstoff (ZSa) oder der zweite metallische Zusatzstoff (ZSb) relativ zum Laserstrahl (L) bewegt wird oder dass der Laserstrahl (L) relativ zu zumindest dem ersten metallischen Zusatzstoff (ZSa) oder dem zweiten metallischen Zusatzstoff (ZSb) bewegt wird.

5. Verfahren nach einem der Ansprüche 3 bis 4, **dadurch gekennzeichnet, dass** die erste Drahtvorschubgeschwindigkeit (v_{da})bei der Bewegung des ersten metallischen Zusatzstoffs (ZSa) relativ zum Grundwerkstoff (G) in Abhängigkeit einer ersten Schweißgeschwindigkeit (vₛₐ) des ersten metallischen Zusatzstoffs (ZSa) relativ zum Grundwerkstoff (G) gewählt wird und/oder die zweite Drahtvorschubgeschwindigkeit (v_{db}) bei der Bewegung des zweiten metallischen Zusatzstoffs (ZSb) relativ zum Grundwerkstoff (G) in Abhängigkeit einer zweiten Schweißgeschwindigkeit (v_{sb}) des zweiten metallischen Zusatzstoffs (ZSb) relativ zum Grundwerkstoff (G) gewählt wird.

6. Verfahren nach einem der Ansprüche bis 1 bis 5, **dadurch gekennzeichnet, dass** mittels des Laserstrahls (L) der metallischen Struktur (21, 21a, 21b) Wärme zur Gefügeveränderung der metallischen Struktur (21, 21a, 21b) zugeführt wird, vorzugsweise zur Vermeidung von Bindefehlern zwischen der ersten und der zweiten Schweißnaht (10a, 10b) und/oder zum Härten und/oder Vergüten einer Oberfläche der ersten und/oder der zweiten Schweißnaht (10a, 10b) oder der metallischen Struktur (21, 21a, 21b) oder dass der Laserstrahl (L) zum Führen des ersten oder des zweiten Lichtbogens (11a, 11b) verwendet wird.

7. Verfahren nach einem der Ansprüche 1 bis 5, **dadurch gekennzeichnet, dass** der Laserstrahl (L) zum Laser-Hybridschweißen verwendet wird, wobei zumindest der erste oder der zweite metallische Zusatzstoff (ZSa, ZSb) an der Schweißstelle (S) vom Laserstrahl (L) und dem ersten oder zweiten Lichtbogen (11a, 11b) abgeschmolzen werden.

8. Verfahren nach einem der Ansprüche 1 bis 7, **dadurch gekennzeichnet, dass** der erste metallische Zusatzstoff (ZSa) die erste Elektrode ausbildet und an der Schweißstelle (S) abgeschmolzen wird und/oder der zweite metallische Zusatzstoff (ZSb) die zweite Elektrode ausbildet und an der Schweißstelle (S) abgeschmolzen wird **oder dass** als erste Elektrode eine nichtabschmelzende erste Elektrode, vorzugsweise eine erste Wolframelektrode, vorgesehen wird, wobei der erste metallische Zusatzstoff (ZSa) der Schweißstelle (S), vorzugsweise mittels einer ersten Zuführeinheit, zugeführt und an der Schweißstelle (S) abgeschmolzen wird und/oder als zweite Elektrode eine nichtabschmelzende zweite Elektrode, vorzugsweise eine zweite Wolframelektrode, vorgesehen wird, wobei der zweite metallische Zusatzstoff (ZSb) der Schweißstelle (S), vorzugsweise mittels einer zweiten Zuführeinheit, zugeführt und an der Schweißstelle (S) abgeschmolzen wird.

9. Schweißanordnung (20) zum Herstellen metallischer Strukturen (21, 21a, 21b) auf einem metallischen Grundwerkstoff (G) mit einer Optik (22) zur Erzeugung eines Laserstrahls (L), mit einem ersten Schweißbrenner (4a) mit einer ersten Elektrode zur Erzeugung eines ersten Lichtbogens (11a) zwischen der ersten Elektrode und dem Grundwerkstoff (G) zum Abschmelzen eines ersten metallischen Zusatzstoffs (ZSa) zur Erzeugung einer ersten Schweißnaht (10a) am Grundwerkstoff (G), mit einer ersten Zuführeinrichtung zum Zuführen des ersten metallischen Zusatzstoffs (ZSa) zu einer Schweißstelle (S) und mit zumindest einer Steuerungseinheit zur Steuerung der Schweißanordnung (20), wobei in der Schweißanordnung (20) zumindest ein zweiter Schweißbrenner (4b) mit einer zweiten Elektrode zur Erzeugung eines zweiten Lichtbogens (11b) zwischen der zweiten Elektrode und dem Grundwerkstoff (G) zum Abschmelzen eines zweiten metallischen Zusatzstoffs (ZSb) zur Erzeugung einer zweiten Schweißnaht (10b) am Grundwerkstoff (G) angeordnet ist und eine zweite Zuführeinrichtung zum Zuführen des zweiten metallischen Zusatzstoffs (ZSb) zur Schweißstelle (S) vorgesehen ist, und wobei als erster metallischer Zusatzstoff (ZSa) und als zweiter metallischer Zusatzstoff (ZSb) verschiedene Werkstoffe vorgesehen sind, **dadurch gekennzeichnet, dass** die Steuerungseinheit zur Ansteuerung der ersten und zweiten Zuführeinrichtung vorgesehen ist, um den ersten metallischen Zusatzstoff (ZSa) und den zweiten metallischen Zusatzstoff (ZSb) der Schweißstelle (S) zeitlich sequentiell zuzuführen, um im jeweils brennenden ersten oder zweiten Lichtbogen (11a, 11b) abgeschmolzen zu werden, um die dreidimensionale metallische Struktur (21, 21a, 21b) zu bilden, wobei der erste und der zweite Schweißbrenner (4a, 4b) als separate Einheiten oder als ein Doppel-Schweißbrenner (27) ausgeführt sind.

10. Schweißanordnung (20) nach Anspruch 9 , **dadurch gekennzeichnet, dass** als erster metallischer Zusatzstoff (ZSa) und als zweiter metallischer Zusatzstoff (ZSb) Schweißdrähte (7a, 7b) gleicher oder verschiedener Dimension vorgesehen sind, vorzugsweise Schweißdrähte (7a, 7b) mit rundem Querschnitt und einem Durchmesser zwischen 0,1 und 5 Millimeter, insbesondere zwischen 0,8 und 2,0 mm.

11. Schweißanordnung (20) nach Anspruch 9 oder 10, **dadurch gekennzeichnet, dass** die erste Zuführeinrichtung vorgesehen ist, den ersten metallischen Zusatzstoff (ZSa) mit einer vorgegebenen ersten Drahtvorschubgeschwindigkeit (v_{da}) der Schweißstelle (S) zuzuführen und dass die zweite Zuführeinrichtung vorgesehen ist, den zweiten metallischen Zusatzstoff (ZSb) mit einer vorgegebenen zweiten Drahtvorschubgeschwindigkeit (v_{db}) der Schweißstelle (S) zuzuführen, wobei die erste Drahtvorschubgeschwindigkeit (v_{da}) und die zweite Drahtvorschubgeschwindigkeit (v_{db}) gleich groß oder verschieden sind und wobei vorzugsweise zumindest die erste oder die zweite Drahtvorschubgeschwindigkeit (v_{da}, v_{db}) in Abhängigkeit einer ersten oder zweiten Schweißgeschwindigkeit (vₛₐ, v_{sb}) des ersten oder zweiten Schweißbrenners (4a, 4b) oder einer Schweißgeschwindigkeit (v_{sc}) des Doppel-Schweißbrenners (27) relativ zum Grundwerkstoff (G) festgelegt ist.

12. Schweißanordnung (20) nach einem der Ansprüche 9 bis 11, **dadurch gekennzeichnet, dass** der erste Schweißbrenner (4a) und der zweite Schweißbrenner (4b) relativ zueinander bewegbar sind.

13. Schweißanordnung (20) nach einem der Ansprüche 9 bis 12, **dadurch gekennzeichnet, dass** der Laserstrahl (L) der Optik (22) zumindest relativ zum ersten oder zweiten Schweißbrenner (4a, 4b) oder Doppel-Schweißbrenner (4c) bewegbar ist oder dass zumindest der erste oder zweite Schweißbrenner (4a, 4b) oder der Doppel-Schweißbrenner (27) relativ zum Laserstrahl (L) bewegbar ist, wobei zur Bewegung des Laserstrahls (L) die Optik (22) bewegbar ist oder in der Optik (22) eine Laser-Verstelleinrichtung (29) zur Bewegung des Laserstrahls (L) vorgesehen ist.

14. Schweißanordnung (20) nach einem der Ansprüche 9 bis 13, **dadurch gekennzeichnet, dass** zumindest eine Elektrode der Schweißanordnung (20) als abschmelzende Elektrode in Form eines metallischen Zusatzstoffs (ZSa, ZSb) und/oder zumindest eine Elektrode als eine nichtabschmelzende Elektrode, vorzugsweise eine Wolframelektrode ausgebildet ist.

15. Verwendung der Schweißanordnung (20) nach einem der Ansprüche 9 bis 14 zur Herstellung dreidimensionaler metallischer Strukturen (21, 21a, 21b) auf einem metallischen Grundwerkstoff (G), wobei mittels des ersten und zweiten Schweißbrenners (4a, 4b) oder mittels des Doppel-Schweißbrenners (27) einer Schweißstelle (S) auf dem metallischen Grundwerkstoff (G) die zwei metallischen Zusatzstoffe (ZSa, ZSb) zeitlich sequentiell zugeführt werden, um die dreidimensionale metallische Struktur (21, 21a, 21b) schichtweise aus zumindest mehreren ersten und/oder zweiten Schweißnähten (10a, 10b) herzustellen.

## Claims

1. A method for the automated production of three-dimensional metallic structures (21, 21a, 21b) on a metallic base material (G), wherein a first metallic additive (ZSa) is fed to a welding point (S), which metallic additive is melted at least by means of a first arc (11a), generated between a first electrode and the base material (G), in order to produce a first weld seam (10a) at the welding point (S), and wherein a laser beam (L) is fed to the welding point (S), wherein a second metallic additive (ZSb) is fed to the welding point (S), which second metallic additive is melted at the welding point (S) at least by means of a second arc (11b), generated between a second electrode and the base material (G), in order to produce a second weld seam (10b), wherein different materials are used as the first metallic additive (ZSa) and as the second metallic additive (ZSb), **characterized in that** the first metallic additive (ZSa) and the second metallic additive (ZSb) are fed sequentially in time to the welding point (S) and are melted in the region of the welding point (S) in the respectively burning first or second arc (11a, 11b) in order to form the three-dimensional metallic structure (21, 21a, 21b).

2. The method according to Claim 1, **characterized in that** welding wires (7a, 7b) of the same or different dimensions are used as the first metallic additive (ZSa) and as the second metallic additive (ZSb), preferably welding wires (7a, 7b) with a round cross section and a diameter between 0.1 and 5 millimeters, in particular between 0.8 and 2 mm.

3. The method according to Claim 1 or 2, **characterized in that** the first metallic additive (ZSa) is fed to the welding point (S) at a predetermined first wire feed rate (v_{da}) and/or the second metallic additive (ZSb) is fed to the welding point (S) at a predetermined second wire feed speed (v_{db}), wherein the first wire feed speed (v_{da}) and the second wire feed speed (v_{db}) are defined to be equal or different and between 2 m/min and 25 m/min.

4. The method according to one of Claims 1 to 3, **characterized in that** the first metallic additive (ZSa), the second metallic additive (ZSb) and the laser beam (L) are moved together relative to the base material (G) and/or that the base material (G) is moved relative to the first metallic additive (ZSa), second metallic additive (ZSb) and laser beam (L) and/or that at least the first metallic additive (ZSa) or the second metallic additive (ZSb) is moved relative to the laser beam (L) or that the laser beam (L) is moved relative to at least the first metallic additive (ZSa) or the second metallic additive (ZSb).

5. The method according to one of Claims 3 to 4, **characterized in that** the first wire feed speed (v_{da}) during the movement of the first metallic additive (ZSa) relative to the base material (G) is selected as a function of a first welding speed (vₛₐ) of the first metallic additive (ZSa) relative to the base material (G), and/or the second wire feed speed (v_{db}) during the movement of the second metallic additive (ZSb) relative to the base material (G) is selected as a function of a second welding speed (v_{sb}) of the second metallic additive (ZSb) relative to the base material (G).

6. The method according to one of Claims 1 to 5, **characterized in that** heat for the structural change of the metallic structure (21, 21a, 21b) is fed to the metallic structure (21, 21a, 21b) by means of the laser beam (L), preferably in order to avoid lack of fusion between the first and the second weld seam (10a, 10b) and/or in order to harden and/or temper a surface of the first and/or the second weld seam (10a, 10b) or the metallic structure (21, 21a, 21b) or that the laser beam (L) is used to guide the first or the second arc (11a, 11b).

7. The method according to one of Claims 1 to 5, **characterized in that** the laser beam (L) is used for laser hybrid welding, wherein at least the first or the second metallic additive (ZSa, ZSb) are melted at the welding point (S) by the laser beam (L) and the first or second arc (11a, 11b).

8. The method according to one of Claims 1 to 7, **characterized in that** the first metallic additive (ZSa) forms the first electrode and is melted at the welding point (S) and/or the second metallic additive (ZSb) forms the second electrode and is melted at the welding point (S), **or in that** a non-consumable first electrode, preferably a first tungsten electrode, is provided as the first electrode, wherein the first metallic additive (ZSa) is fed to the welding point (S), preferably by means of a first feed unit, and is melted at the welding point (S), and/or a non-consumable second electrode, preferably a second tungsten electrode, is provided as the second electrode, wherein the second metallic additive (ZSb) is fed to the welding point (S), preferably by means of a second feed unit, and is melted at the welding point (S).

9. A welding arrangement (20) for producing metallic structures (21, 21a, 21b) on a metallic base material (G) with an optical system (22) for generating a laser beam (L), with a first welding torch (4a) with a first electrode for generating a first arc (11a) between the first electrode and the base material (G) in order to melt a first metallic additive (ZSa) in order to generate a first weld seam (10a) on the base material (G), with a first feed device for feeding the first metallic additive (ZSa) to a welding point (S) and with at least one control unit for controlling the welding arrangement (20), wherein in the welding arrangement (20), at least one second welding torch (4b) with a second electrode for generating a second arc (11b) between the second electrode and the base material (G) is provided in order to melt a second metallic additive (ZSb) in order to generate a second weld seam (10b) on the base material (G), and a second feed device for feeding the second metallic additive (ZSb) to the welding point (S) is provided, and wherein different materials are provided as the first metallic additive (ZSa) and as the second metallic additive (ZSb), **characterized in that** the control unit is provided for controlling the first and second feed devices in order to feed the first metallic additive (ZSa) and the second metallic additive (ZSb) sequentially in time to the welding point (S) in order for the additives to be melted in the respectively burning first or second arc (11a, 11b) in order to form the three-dimensional metallic structure (21, 21a, 21b), wherein the first and the second welding torch (4a, 4b) are designed as separate units or as a double welding torch (27).

10. The welding arrangement (20) according to Claim 9, **characterized in that** welding wires (7a, 7b) of the same or different dimensions are provided as the first metallic additive (ZSa) and as the second metallic additive (ZSb), preferably welding wires (7a, 7b) with a round cross section and a diameter between 0.1 and 5 millimeters, in particular between 0.8 and 2.0 mm.

11. The welding arrangement (20) according to Claim 9 or 10, **characterized in that** the first feed device is provided to feed the first metallic additive (ZSa) to the welding point (S) at a predetermined first wire feed speed (v_{da}), and that the second feed device is provided to feed the second metallic additive (ZSb) to the welding point (S) at a predetermined second wire feed speed (v_{db}), wherein the first wire feed speed (v_{da}) and the second wire feed speed (v_{db}) are equal or different, and wherein preferably at least the first or the second wire feed speed (v_{da}, v_{db}) is defined as a function of a first or second welding speed (vₛₐ, v_{sb}) of the first or second welding torch (4a, 4b) or a welding speed (v_{sc}) of the double welding torch (27) relative to the base material (G).

12. The welding arrangement (20) according to one of Claims 9 to 11, **characterized in that** the first welding torch (4a) and the second welding torch (4b) are movable relative to one another.

13. The welding arrangement (20) according to one of Claims 9 to 12, **characterized in that** the laser beam (L) of the optical system (22) is movable at least relative to the first or second welding torch (4a, 4b) or to the double welding torch (4c) or that at least the first or second welding torch (4a, 4b) or the double welding torch (27) can be moved relative to the laser beam (L), wherein in order to move the laser beam (L) the optical system (22) is movable or a laser adjustment device (29) for moving the laser beam (L) is provided in the optical system (22).

14. The welding arrangement (20) according to one of Claims 9 to 13, **characterized in that** at least one electrode of the welding arrangement (20) is formed as a consumable electrode in the form of a metallic additive (ZSa, ZSb) and/or at least one electrode is formed as a non-consumable electrode, preferably a tungsten electrode.

15. A use of the welding arrangement (20) according to one of Claims 9 to 14 for producing three-dimensional metallic structures (21, 21a, 21b) on a metallic base material (G), wherein by means of the first and second welding torches (4a, 4b) or by means of the double welding torch (27), the two metallic additives (ZSa, ZSb) are fed sequentially in time to a welding point (S) on the metal base material (G) in order to produce the three-dimensional metallic structure (21, 21a, 21b) in layers from at least a plurality of first and/or second weld seams (10a, 10b).

## Revendications

1. Procédé pour la fabrication automatisée de structures métalliques tridimensionnelles (21, 21a, 21b) sur un matériau de base métallique (G), un premier additif métallique (ZSa) étant amené à un point de soudage (S), lequel est fondu au moins au moyen d'un premier arc électrique (11a) généré entre une première électrode et le matériau de base (G) pour la fabrication d'un premier joint de soudure (10a) au point de soudure (S), et un faisceau laser (L) étant amené au point de soudure (S), un deuxième additif métallique (ZSb) étant amené au point de soudure (S), lequel est fondu au moins au moyen d'un deuxième arc électrique (11b) généré entre une deuxième électrode et le matériau de base (G) pour la fabrication d'un deuxième joint de soudure (10b) au point de soudure (S), différents matériaux étant utilisés comme premier additif métallique (ZSa) et comme deuxième additif métallique (ZSb), **caractérisé en ce que** le premier additif métallique (ZSa) et le deuxième additif métallique (ZSb) sont amenés séquentiellement dans le temps au point de soudure (S) et sont fondus dans la zone du point de soudure (S) dans le premier ou le deuxième arc électrique (11a, 11b) brûlant respectif, pour former la structure métallique tridimensionnelle (21, 21a, 21b).

2. Procédé selon la revendication 1, **caractérisé en ce que** des fils de soudage (7a, 7b) de dimensions identiques ou différentes sont utilisés comme premier additif métallique (ZSa) et comme deuxième additif métallique (ZSb), de préférence des fils de soudage (7a, 7b) ayant une coupe transversale ronde et un diamètre situé entre 0,1 et 5 millimètres, en particulier entre 0,8 et 2 mm.

3. Procédé selon la revendication 1 ou 2, **caractérisé en ce que** le premier additif métallique (ZSa) est amené au point de soudure (S) à une première vitesse d'avancement de fil (v_{da}) prédéfinie et/ou le deuxième additif métallique (ZSb) est amené au point de soudure (S) à une deuxième vitesse d'avancement de fil (v_{db}) prédéfinie, la première vitesse d'avancement de fil (v_{da}) et la deuxième vitesse d'avancement de fil (v_{db}) étant fixées égales ou différentes entre 2 m/min et 25 m/min.

4. Procédé selon l'une quelconque des revendications 1 à 3, **caractérisé en ce que** le premier additif métallique (ZSa), le deuxième additif métallique (ZSb) et le faisceau laser (L) sont déplacés ensemble par rapport au matériau de base (G) et/ou **en ce que** le matériau de base (G) est déplacé par rapport au premier additif métallique (ZSa), au deuxième additif métallique (ZSb) et au faisceau laser (L) et/ou **en ce qu'**au moins le premier additif métallique (ZSa) ou le deuxième additif métallique (ZSb) est déplacé par rapport au faisceau laser (L) ou **en ce que** le faisceau laser (L) est déplacé par rapport à au moins le premier additif métallique (ZSa) ou le deuxième additif métallique (ZSb).

5. Procédé selon l'une quelconque des revendications 3 à 4, **caractérisé en ce que** la première vitesse d'avancement de fil (v_{da}) est choisie, lors du déplacement du premier additif métallique (ZSa) par rapport au matériau de base (G), en fonction d'une première vitesse de soudage (vₛₐ) du premier additif métallique (ZSa) par rapport au matériau de base (G) et/ou la deuxième vitesse d'avancement de fil (v_{db}) est choisie, lors du déplacement du deuxième additif métallique (ZSa) par rapport au matériau de base (G), en fonction de la deuxième vitesse de soudage (v_{sb}) du deuxième additif métallique (ZSa) par rapport au matériau de base (G).

6. Procédé selon l'une quelconque des revendications 1 à 5, **caractérisé en ce que** de la chaleur est amenée à la structure métallique (21, 21a, 21b) au moyen du faisceau laser (L) pour la modification structurelle de la structure métallique (21, 21a, 21b), de préférence pour la prévention de défauts de liaison entre le premier et le deuxième joint de soudure (10a, 10b) et/ou pour le durcissement et/ou la trempe d'une surface du premier et/ou du deuxième joint de soudure (10a, 10b) ou de la structure métallique (21, 21a, 21b) ou **en ce que** le faisceau laser (L) est utilisé pour guider le premier ou le deuxième arc électrique (11a, 11b).

7. Procédé selon l'une quelconque des revendications 1 à 5, **caractérisé en ce que** le faisceau laser (L) est utilisé pour le soudage laser hybride, au moins le premier ou le deuxième additif métallique (ZSa, ZSb) étant fondu au point de soudure (S) par le faisceau laser (L) et le premier ou deuxième arc électrique (11a, 11b).

8. Procédé selon l'une quelconque des revendications 1 à 7, **caractérisé en ce que** le premier additif métallique (ZSa) forme la première électrode et est fondu au point de soudure (S) et/ou le deuxième additif métallique (ZSb) forme la deuxième électrode et est fondu au point de soudure (S) **ou en ce que** une première électrode non fusible, de préférence une première électrode de tungstène, est prévue comme première électrode, le premier additif métallique (ZSa) étant amené au point de soudure (S) de préférence au moyen d'une première unité d'alimentation et étant fondu au point de soudure (S), et/ou une deuxième électrode non fusible, de préférence une deuxième électrode de tungstène, est prévue comme deuxième électrode, le deuxième additif métallique (ZSb) étant amené au point de soudure (S) de préférence au moyen d'une deuxième unité d'alimentation et étant fondu au point de soudure (S).

9. Dispositif de soudage (20) pour la fabrication de structures métalliques (21, 21a, 21b) sur un matériau de base (G) métallique comprenant une optique (22) pour la génération d'un faisceau laser (L), comprenant une première torche de soudage (4a) comprenant une première électrode pour la génération d'un premier arc électrique (11a) entre la première électrode et le matériau de base (G) pour la fusion d'un premier additif métallique (ZSa) pour la génération d'un premier joint de soudure (10a) sur le matériau de base (G), comprenant une première unité d'alimentation pour l'amenée du premier additif métallique (ZSa) à un point de soudure (S) et comprenant au moins une unité de commande pour la commande du dispositif de soudage (20), dans lequel dans le dispositif de soudage (20), au moins une deuxième torche de soudage (4b), comprenant une deuxième électrode, pour la génération d'un deuxième arc électrique (11b) entre la deuxième électrode et le matériau de base (G) pour la fusion d'un deuxième additif métallique (ZSb) pour la génération d'un deuxième joint de soudure (10b), étant disposée dans le dispositif de soudage (20) et une deuxième unité d'alimentation étant prévue pour l'amenée du deuxième additif métallique (ZSb) au point de soudure (S), et des matériaux différents étant prévus comme premier additif métallique (ZSa) et comme deuxième additif métallique (ZSb), **caractérisé en ce que** l'unité de commande est prévue pour la commande de la première et de la deuxième unité d'alimentation, pour amener le premier additif métallique (ZSa) et le deuxième additif métallique (ZSb) séquentiellement dans le temps au point de soudure (S) pour être fondus dans le premier ou le deuxième arc électrique (11a, 11b) brûlant respectif, pour former la structure métallique tridimensionnelle (21, 21a, 21b), la première et la deuxième torche de soudage (4a, 4b) étant réalisées comme des unités séparées ou comme une torche de soudage double (27).

10. Dispositif de soudage (20) selon la revendication 9, **caractérisé en ce que** des fils de soudage (7a, 7b) de dimensions identiques ou différentes sont prévus comme premier additif métallique (ZSa) et comme deuxième additif métallique (ZSb), de préférence des fils de soudage (7a, 7b) ayant une coupe transversale ronde et un diamètre situé entre 0,1 et 5 millimètres, en particulier entre 0,8 et 2,0 mm.

11. Dispositif de soudage (20) selon la revendication 9 ou 10, **caractérisé en ce que** la première unité d'alimentation est prévue pour amener le premier additif métallique (ZSa) à une première vitesse d'avancement de fil (v_{da}) prédéfinie au point de soudure (S) et **en ce que** la deuxième unité d'alimentation est prévue pour amener le deuxième additif métallique (ZSb) à une deuxième vitesse d'avancement de fil (v_{db}) prédéfinie au point de soudure (S), la première vitesse d'avancement de fil (v_{da}) et la deuxième vitesse d'avancement de fil (v_{db}) étant égales ou différentes et de préférence au moins la première ou la deuxième vitesse d'avancement de fil (v_{da}, v_{db}) étant fixée en fonction d'une première ou deuxième vitesse de soudage (vₛₐ, v_{sb}) de la première ou deuxième torche de soudage (4a, 4b) ou d'une vitesse de soudage (v_{sc}) de la torche de soudage double (27) par rapport au matériau de base (G).

12. Dispositif de soudage (20) selon l'une quelconque des revendications 9 à 11, **caractérisé en ce que** la première torche de soudage (4a) et la deuxième torche de soudage (4b) peuvent être déplacées l'une par rapport à l'autre.

13. Dispositif de soudage (20) selon l'une quelconque des revendications 9 à 12, **caractérisé en ce que** le faisceau laser (L) de l'optique (22) peut être déplacé au moins par rapport à la première ou à la deuxième torche de soudage (4a, 4b) ou par rapport à la torche de soudage double (4c) ou **en ce qu'**au moins la première ou deuxième torche de soudage (4a, 4b) ou la torche de soudage double (27) peut être déplacée par rapport au faisceau laser (L), l'optique (22) pouvant être déplacée pour le déplacement du faisceau laser (L) ou un dispositif de déplacement de laser (29) étant prévu dans l'optique (22) pour le déplacement du faisceau laser (L).

14. Dispositif de soudage (20) selon l'une quelconque des revendications 9 à 13, **caractérisé en ce qu'au** moins une électrode du dispositif de soudage (20) est réalisée comme électrode fusible sous la forme d'un additif métallique (ZSa, ZSb) et/ou au moins une électrode est réalisée comme électrode non fusible, de préférence comme électrode de tungstène.

15. Utilisation du dispositif de soudage (20) selon l'une quelconque des revendications 9 à 14 pour la fabrication de structures métalliques tridimensionnelles (21, 21a, 21b) sur un matériau de base (G) métallique, les deux additifs métalliques (ZSa, ZSb) étant amenés séquentiellement dans le temps à un point de soudure (S) sur le matériau de base (G) métallique au moyen de la première et deuxième torche de soudage (4a, 4b) ou au moyen de la torche de soudage double (27), pour fabriquer la structure métallique tridimensionnelle (21, 21a, 21b) par couches à partir d'au moins plusieurs premiers et/ou deuxièmes joints de soudure (10a, 10b).
